# EUROPEAN PATENT SPECIFICATION

(11) **EP 4 693 019 B1**
(45) Date of publication and mention of the grant of the patent: **16.09.2026**
(21) Application number: 25194679.4
(22) Date of filing: 07.08.2025
(51) Int. Cl.: G06F 7/544

(54) **ANALOG COMPUTING CIRCUIT WITH COMPRESSION**
ANALOGE RECHENSCHALTUNG MIT KOMPRIMIERUNG
CIRCUIT DE CALCUL ANALOGIQUE AVEC COMPRESSION

(30) Priority: 08.08.2024 FR 2408769; 13.09.2024 FR 2409782
(43) Date of publication of application: 11.02.2026
(73) Proprietor: Commissariat à l'Energie Atomique et aux Energies Alternatives, 75015 Paris (FR)
(72) Inventor: VU, Phan-Anh, 38054 GRENOBLE CEDEX 09 (FR); DALGATY, Thomas, 38054 GRENOBLE CEDEX 09 (FR)
(74) Representative: Cabinet Beaumont

(56) References cited:
- US-A1- 2023 238 055
- YEMING WEN ET AL: "BatchEnsemble: an Alternative Approach to Efficient Ensemble and Lifelong Learning", ARXIV.ORG, CORNELL UNIVERSITY LIBRARY, 201 OLIN LIBRARY CORNELL UNIVERSITY ITHACA, NY 14853, 17 February 2020 (2020-02-17), XP081601058
- DALGATY THOMAS ET AL: "In-situ learning harnessing intrinsic resistive memory variability through Markov Chain Monte Carlo Sampling", ARXIV.ORG, 30 January 2020 (2020-01-30), XP093250387, Retrieved from the Internet <URL:https://arxiv.org/pdf/2001.11426>

## Description

### Technical field

The present disclosure relates generally to analog computing circuits configured to perform multiply and accumulate operations.

### Background art

Neural networks present a powerful tool for certain classification and regression tasks such as image classification. A trained classification model is able to generate, for given input data, a set of prediction score for each class among a set of classes recognizable by the model, and a predicted class, selected as the class having the highest prediction score.

However, a problem that can occur is that a trained classification model may be over confident, and generate a very high prediction probability for an incorrect class. For example, this can occur when the model is over-fitted, when the input data is out-of-distribution, meaning that the type of data has not be encountered during training, or in the case of ambiguous data points.

A solution to this problem that has been proposed is to train multiple models, such as tens or even hundreds of models, for the same dataset. This technique is often referred to as ensembling, and is described for example in more detail in the publication by Stanislav Fort, Huiyi Hu, Balaji Lakshminarayanan entitled "Deep Ensembles: A Loss Landscape Perspective", June 24, 2020, available at http://arxiv.org/abs/1912.02757. Such methods have been found to perform well in practice, both in terms of classification accuracy and uncertainty calibration.

However, a difficulty with existing implementations of neural networks capable of applying an ensemble of multiple models is that the memory requirements, energy consumption and processing time are also multiplied by the number of models that are implemented. For example, the implementation of a neural network applying an ensemble of 100 models requires up to 100 times more memory and energy when compared to a neural network implementing a single model.

There is thus a need for an improved neural network architecture that at least partially addresses this difficulty in the prior art.

### Summary of Invention

One embodiment provides an analog vector multiplier circuit comprising a first circuit for performing a first multiplication of a first or second value with a third value, the first circuit comprising:
- a first branch comprising the series connection of a first programmable resistive element and a first transistor, the first programmable resistive element being programmed to have a first resistance representative of the first value;
- a second branch comprising the series connection of a second programmable resistive element and a second transistor, the second programmable resistive element being programmed to have a second resistance representative of the second value;
- a control circuit configured to control the first and second transistors to select the first or second branch; and
- a first current mirror configured to apply a current generated based on the third value to the branch selected by the control circuit in order to generate, across the selected branch, a first voltage proportional to the result of the first multiplication.

According to an embodiment, the above analog vector multiplier further comprises a second circuit for performing, in parallel with the first multiplication, a second multiplication of a fourth or fifth value with a sixth value, the second circuit comprising:
- a third branch comprising the series connection of a third programmable resistive element and a third transistor, the third programmable resistive element being programmed to have a third resistance representative of the fourth value;
- a fourth branch comprising the series connection of a fourth programmable resistive element and a fourth transistor, the fourth programmable resistive element being programmed to have a fourth resistance representative of the fifth value, wherein the control circuit is configured to control the third and fourth transistors to select the third or fourth branch;
- a second current mirror configured to apply a current generated based on the sixth value to the branch of the second circuit selected by the control circuit in order to generate, across the selected branch, a second voltage proportional to the result of the second multiplication.

One embodiment provides the above neural network comprising the analog vector multiplier circuit.

According to an embodiment, the above neural network further comprises a first crossbar array circuit configured to output one or more second current values by performing one or more multiplication and/or accumulation operations based on at least the first voltage.

According to an embodiment, the above neural network further comprises a further analog vector multiplier circuit configured to generate one or more output voltages by performing one or more multiplication operations based on the one or more second current values.

According to an embodiment, the above neural network further comprises:
- a first voltage replication circuit configured to replicate the first voltage generated by the first circuit and supply the replicated voltage to the crossbar circuit, the first voltage replication circuit comprising an operational amplifier.

According to an embodiment, the third and sixth values are components of an input vector of size *n, n* being an integer, the circuit being further configured to perform a number K of sequences of multiply and accumulate operations, K being an integer representing a number of models implemented by the neural network.

According to an embodiment:
- the analog vector multiplier circuit comprises a number of ***K* × *n*** resistive elements programmed to the values of coefficients of ***K*** horizontal vectors of size ***n;***
- the crossbar circuit comprises ***n* × *n*** resistive elements programmed to the inverse values of coefficient of a shared matrix (S) of size ***n* × *n*.**

According to an embodiment, the further analog vector multiplier circuit comprises a number of ***K* × *n*** resistive elements programmed to the values of coefficients of ***K*** vertical vectors of size ***n*.**

According to an embodiment:
- the analog vector multiplier circuit comprises a number of ***n* × *n*** resistive elements programmed to the inverse values of coefficients of a shared matrix of size ***n* × *n*;**
- the crossbar circuit comprises a number of ***K* × *n*** resistive elements programmed to the values of coefficients of ***K*** horizontal vectors of size ***n*;** and
- the further analog vector multiplier circuit comprises a number of ***K* × *n*** resistive elements programmed to the values of coefficients of ***K*** vertical vectors of size ***n.***

According to an embodiment, the above neural network is configured to generate, for each model ***k*** among the K models implemented by the neural network, ***n*** output voltages corresponding to ***n*** output values ${y}_{i}^{k}$*,* **1 ≤ *i* ≤ *n,*** verifying the following equation : ${y}_{i}^{k} = {v}_{1}^{k} \times \left({h}_{1}^{k}\times {x}_{1}\times {s}_{i , 1}+…+{h}_{n}^{k}\times {x}_{n}\times {s}_{i , n}\right) ,$ where ${v}_{j}^{k}$*,* **1 ≤ *j* ≤ *n,*** is the value of the j-th coefficient of the k-th vertical vector, ${h}_{j}^{k}$*,* **1 ≤ *j* ≤ *n,*** is the value of the j-th coefficient of the k-th horizontal vector, ***s_{i,j},*** is the value of the i-th row and j-th column of the shared matrix, and ***xⱼ*, 1 ≤ *j* ≤ *n,*** is the j-th component of the input vector.

According to an embodiment, the above neural network is configured to perform classification operations.

One embodiment provides a method of performing, by a first circuit of an analog vector multiplier circuit, a first multiplication of a first or second value with a third value comprising for, the method comprising:
- programming a first programmable resistive element to have a first resistance representative of the first value, the first programmable resistive element being connected in series with a first transistor in a first branch of the first circuit;
- programming a second programmable resistive element to have a second resistance representative of the second value, the second programmable resistive element being connected in series with a second transistor in a second branch of the first circuit;
- controlling, by a control circuit, the first and second transistors to select the first or second branch; and
- applying, by a first current mirror, a current generated based on the third value to the branch selected by the control circuit in order to generate, across the selected branch, a first voltage proportional to the result of the first multiplication.

According to an embodiment, the above method further comprises the conversion, by an analog to digital converter, of the first voltage into a digital value.

According to an embodiment, the second and third values are values of an image.

One embodiment provides a method of training the above neural network, the method comprising determining the first and second values using a Markov chain Monte Carlo learning approach.

According to an embodiment, the analog vector multiplier circuit comprises OxRAM devices and the Markov chain Monte Carlo learning approach comprises an application of a Metropolis-Hastings algorithm.

According to an embodiment, the analog multiplier circuit comprises magnetic domain-wall devices and the Markov chain Monte Carlo learning approach comprises an application of a Stochastic Gradient Langevin Dynamics algorithm.

### Brief description of drawings

The foregoing features and advantages, as well as others, will be described in detail in the following description of specific embodiments given by way of illustration and not limitation with reference to the accompanying drawings, in which:
Figure 1 illustrates examples of prediction calculations based on several models;
Figure 2A and Figure 2B illustrate a prediction calculation based on a BatchEnsemble calculation;
Figure 3 is a schematic representation of an analog circuit configured to perform 2 element wise multiplications before and after a multiply and accumulation operation according to an embodiment of the present disclosure;
Figure 4A schematically illustrates a vector multiplier circuit according to an embodiment of the present disclosure;
Figure 4B schematically illustrates a vector multiplier circuit according to an alternative embodiment to that of Figure 4A;
Figure 5A schematically illustrates a crossbar array circuit according to an embodiment of the present disclosure;
Figure 5B schematically illustrates the crossbar array circuit of Figure 5A, and an example of transition circuitry;
Figure 6A schematically illustrates a vector multiplier circuit according to an embodiment of the present disclosure;
Figure 6B schematically illustrates a vector multiplier circuit according to a further embodiment of the present disclosure;
Figure 7 schematically illustrates an example of a current mirror circuit according to an embodiment of the present disclosure;
Figure 8A schematically illustrates another example of a crossbar array circuit according to an embodiment of the present disclosure;
Figure 8B schematically illustrates another example of a vector multiplier circuit according to an embodiment of the present disclosure;
Figure 9 is a schematic representation of another analog circuit configured to perform 2 element wise multiplications before and after a multiply and accumulation operation according to an embodiment of the present disclosure;
Figure 10 illustrates an example of prediction calculations based on several models for a parallelized model according to an embodiment of the present disclosure;
Figure 11 is a schematic representation of yet another analog circuit configured to perform 2 element wise multiplications before and after a multiply and accumulation operation according to an embodiment of the present disclosure;
Figure 12A is a graph illustrating an example of probabilities of conductance levels of a programmable resistive element;
Figure 12B is a flow diagram illustrating a method of training an analog circuit according to an embodiment of the present disclosure;
Figure 13A is a graph illustrating an example of the SGLD (Stochastic Gradient Langevin Dynamics) algorithm, which involves random sampling;
Figure 13B is a flow diagram illustrating a method of training an analog circuit according to an embodiment of the present disclosure;
Figure 14 illustrates a prediction calculation based on a low rank approximation;
Figure 15 is a schematic representation of an analog circuit configured to perform 2 element wise multiplications before and after a multiply and accumulation operation based on the prediction calculation of Figure 14, according to an embodiment of the present disclosure;
Figure 16 is a schematic representation of an analog circuit configured to perform 2 element wise multiplications before and after a multiply and accumulation operation based on the prediction calculation of Figure 14, according to an embodiment of the present disclosure;
Figure 17 schematically illustrates a vector multiplier circuit based on the prediction calculation of Figure 14, according to an embodiment of the present disclosure;
Figure 18 schematically illustrates a crossbar array circuit according to an embodiment of the present disclosure; and
Figure 19 illustrates a matrix multiplier circuit based on the prediction calculation of Figure 14, according to an embodiment of the present disclosure.

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail. In particular, the functioning of neural networks and in particular of neural networks configured to perform prediction operations is not described in detail.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

In the following description, examples of neural network architectures are described that are capable of applying multiple models, such as an integer K greater than or equal to 2 models. In the following, for the sake of clarity in the figures, the implementation of only three models is illustrated. Moreover, also for the sake of clarity in the figures, input data comprises only 2 elements. Generally, for example, when the classification is made on images, the input data input of the neural network comprises many more than 2 elements. For example, in the case of image classification, the size of the input data corresponds to the numbers of pixels of an input image multiplied by the number of channels, such as color channels, in the images.

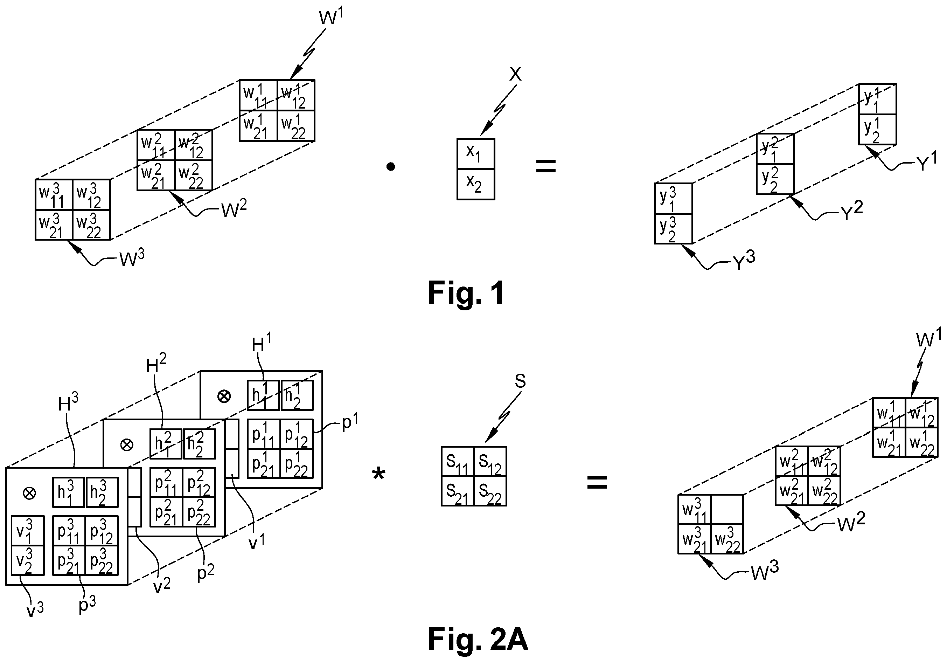

Figure 1 illustrates examples of prediction calculations based on three models of an ensemble. In particular, Figure 1 illustrates matrix multiplication operations between input data ***X*** and weight matrices ***W*¹, *W*²** and ***W*³.** The input data ***X*** is for example a vector ***X =* (*x*₁, *x*₂)** of size 2, where ***x*₁** and ***x*₂** are for example real numbers. In an example, the values ***x*₁** and ***x*₂** are normalized values, for example belonging to the interval **[0,1],** or to the interval **[-1,1],** or to any other suitable interval.

The weight matrices ***W*¹, *W*²** and ***W*³** are each associated with a linear layer of the neural network. Each model describes a neural network, for example a classification neural network, and in the example of Figure 1, each model comprises a single linear layer described by the corresponding weight matrix. More generally, each model may comprise one or more linear layers, each associated with a corresponding weights matrix, and optionally by an activation function. In some embodiments, the activation functions of the hidden layers are identity functions. The computation by the neural network for example flows sequentially, from an input layer, through the hidden layers, to an output layer. An incoming data to the next layer in the chain of layers is an outgoing data of the previous layer in the chain.

The models in the ensemble have for example been fitted during a training phase using, for example, different initialization parameters and/or using different training algorithms, such that the generated models and their generated parameter values are not identical to each other. In particular, in some embodiments, no two matrices among the weight matrices ***W*¹, *W*²** and ***W*³** are exactly equal to each other.

Figure 1 illustrates an example of three matrix multiplication operations, one for each model, performed during an inference operation using the neural network. Each weights matrix is of size **2 × 2,** and ${w}_{i , j}^{k}$ refers to the element of the ***i***-th row, ***j***-th column of the k-th model, with **1 ≤ *i*, *j*, ≤ 2** and **1 ≤ *k* ≤ 3.** In practice, the size of each of the weight matrices is for example significantly higher, each matrix for example having a size of between **100 × 100** and **10 000** × **10 000.** More generally, each weight matrix ***W*** for example has dimension ***n* × *m,*** in the case that the input vector ***X*** is of dimension ***m*** and the output vector ***Y*** is of dimension ***n.***

The matrix multiplication between the matrix ***W*¹** and the input vector ***X*** results in an output vector ${Y}^{1} = \left({y}_{1}^{1}, {y}_{2}^{1}\right)$*,* the matrix multiplication between the matrix ***W*²** and the input vector ***X*** results in an output vector ${Y}^{2} = \left({y}_{1}^{2}, {y}_{2}^{2}\right)$ and the matrix multiplication between the matrix ***W*³** and the input vector ***X*** results in an output vector ${Y}^{3} = \left({y}_{1}^{3}, {y}_{2}^{3}\right)$.

The storage of each of the weight matrices for each of the models is costly in terms of memory storage. Moreover, performing multiple matrix multiplications, equal in number to the number of models, is costly in time and energy.

Figure 2A illustrates an example of a BatchEnsemble calculation. BatchEnsemble is an algorithm that approximates ensembles while using relatively low memory space, as proposed by Yeming Wen, Dustin Tran, Jimmy Ba, in their publication "BatchEnsemble: An Alternative Approach to Efficient Ensemble and Lifelong Learning", 2020-02-19. In particular, the BatchEnsemble calculation allows an approximation of the weight matrices ***W*¹, *W*²** and ***W*³** to be computed on the basis of a single matrix ***S*,** shared among the three weight matrices, along with a pair of vectors for each of the matrices ***W*¹, *W*²** and ***W*³.** The matrix ***S*** has the same dimensions as each of the weight matrices, and in the example of Figure 2A, it is for example of size **2 × 2,** and comprises elements ***s*_{*i*,*j*},** with **1 ≤ *i,j* ≤ 2.** In particular, the matrix *S* is such that there exist matrices ***P*¹, *P*²** and ***P*³** such that ***P*¹ *_{*} S* = *W*¹,** *P*² *_{*} S = W*² and ***P*³ _{*} *S = W*³,** where _{*} is the element-wise multiplication operation, also known under the name scalar-scalar multiplication or point to point multiplication.

Moreover, there exist horizontal vectors, of size **1 × 2,** ${H}^{1} = \left({h}_{1}^{1}, {h}_{2}^{1}\right) , {H}^{2} = \left({h}_{1}^{2}, {h}_{2}^{2}\right)$ and ${H}^{3} = \left({h}_{1}^{3}, {h}_{2}^{3}\right)$ and vertical vectors, of size **2 × 1, *V*¹, *V*²** and ***V*³,** such that their transpose are respectively equal to $\left({v}_{1}^{1}, {v}_{2}^{1}\right) , \left({v}_{1}^{2}, {v}_{2}^{2}\right)$ and $\left({v}_{1}^{3}, {v}_{2}^{3}\right)$. These vectors are built such that ***H*¹ ⊗ *V*¹ = *P*¹, *H*² ⊗ *V*² = *P*²** and ***H*³ ⊗ *V*³ = *P*³,** where ⊗ is the outer product.

The shared matrix ***S*,** and the horizontal and vertical vectors ***H*¹, *H*², *H*³, *V*¹, *V*²** and ***V*³** are then such that **(*H*¹ ⊗ *V*¹) *_{*} S* = *W*¹*,* (*H*² ⊗ *V*²) *_{*} S = W*²** and **(*H*³ ⊗ *V*³) _{*} *S* = *W*³.**

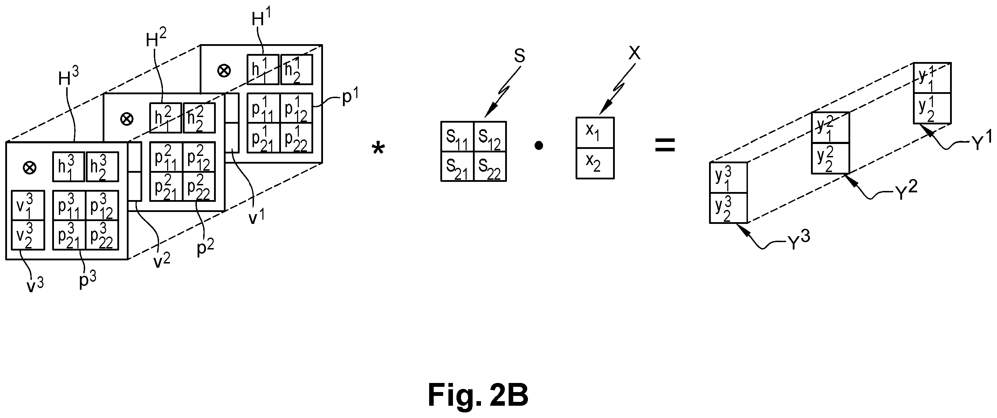

Figure 2B illustrates a full BatchEnsemble calculation of the output data ***Y*¹, *Y*², *Y*³*.*** Considering the shared matrix ***S*,** the horizontal and vertical vectors ***H*¹, *H*², *H*³, *V*¹, *V*²** and ***V*³** and the input data ***X*** described in relation with Figures 1 and 2A, the output data values ***Y*¹, *Y*², *Y*³** are then, respectively, equal to **[(*H*¹ ⊗ *V*¹) *_{*} S*] *· X,* [(*H*² ⊗ *V*²) *_{*} S*] *· X*** and **[(*H*³ ⊗ *3*) *_{*} S*] · *X*** , where · refers to usual matrix-vector multiplication.

The elements ${y}_{1}^{k}$ and ${y}_{2}^{k}$, **1 ≤ *k* ≤ 3** , can then be expressed as sequences of scalar multiplications, denoted by ×, and additions. In particular, the elements ${y}_{1}^{k}$ and ${y}_{2}^{k}$*,* for each model ***k*** with **1 ≤ *k* ≤** 3, are such that: $\begin{matrix}{y}_{1}^{k} = {v}_{1}^{k} \times \left({h}_{1}^{k}\times {x}_{1}\times {s}_{1 , 1}+{h}_{2}^{k}\times {x}_{2}\times {s}_{1 , 2}\right) ; \\ {y}_{2}^{k} = {v}_{2}^{k} \times \left({h}_{1}^{k}\times {x}_{1}\times {s}_{2 , 1}+{h}_{2}^{k}\times {x}_{2}\times {s}_{2 , 2}\right) .\end{matrix}$

The person skilled in the art will understand how to extend these equations when the shared matrix ***S*,** each horizontal vector and each vertical vector are respectively of size ***n* × *n*, 1 × *n*** and ***n* × 1**, with ***n*** being an integer for example of at least 2 or any other number and for example of at least 10, and generally of between 10 and 1 000, representing the size of the input and output data. For example, in the case where the shared matrix S is of size 2, the full storage and compressed costs are the same for all values of k. Starting from a matrix of size 3x3, the compressed cost becomes smaller than the full cost. Indeed, for full matrices, that is to say without compression, the total number of elements to be stored is equal to ***n* × *m* × *k*,** while, for compressed matrices, this number is equal to ***n* × *m* + *k* × (*n* + *m*)*.*** Moreover, the person skilled in the art will understand how to generalized to a number ***K*** of models, with ***K*** being an integer for example equal to at least 2, and preferably to at least 10, and for example of between 10 and 1 000. In this case, there will be a number of ***K*** horizontal vectors and of ***K*** vertical vectors.

The use of BatchEnsemble calculations leads to a reduced amount of memory storage for storing ***K*** weight matrices, as instead of storing ***K*** weight matrices each of size ***n* × *n,*** only the shared matrix ***S*** of size ***n* × *n*** is stored, along with ***2K*** vectors of size ***n.***

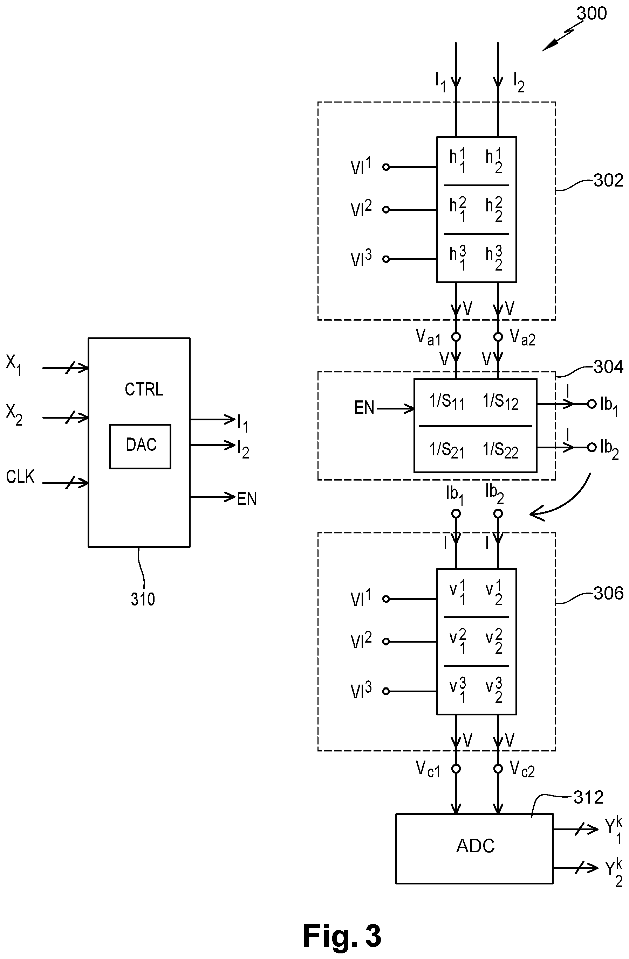

Figure 3 is a schematic representation of an analog circuit 300 configured to perform element wise multiplications before and after MAC operations according to an embodiment of the present disclosure. In particular, the circuit 300 comprises three circuit blocks 302, 304 and 306 configured to implement a BatchEnsemble calculation, as described in relation with Figure 2B. The analog circuit 300 for example implements a linear layer of a neural network.

The circuit blocks 302 and 306 are, for example, multiplier circuits configured to output voltage values based on input currents. The circuit block 304 is for example a crossbar array configured to output currents based on voltage inputs.

The circuit block 302 is for example configured to receive, via two input lines, currents ***I*₁** and ***I*₂** respectively encoding the input data values ***x*₁** and ***x*₂.** The currents ***I*₁** and ***I*₂** are, for example, supplied by the control circuit 310.

The circuit block 302 is further configured to implement the multiplication between the input data values ***x*₁** and ***x*₂** and the elements of the horizontal vectors ***H^{k},* 1 ≤ *k* ≤ 3.** The circuit block 302 also receives, on corresponding input lines, input voltages ***Vl^{k},*** with **1 ≤ *k* ≤ 3,** for activating one multiplication operation involving the currents ***I*₁** and ***I*₂** and a selected one of the horizontal vectors ***H^{k}.*** In particular, in order to activate the model ***k,*** the voltage ***Vl^{k}*** is set to an activated level, such as to a supply voltage Vdd of the circuit 300, and the other input voltages are set to a deactivated level, for example to the ground voltage. The voltages ***Vl*¹, *Vl*²** and ***Vl*³** are for example generated by the control circuit 310.

Moreover, the circuit block 302 comprises resistive elements (not illustrated in Figure 3) encoding the values of the elements of the horizontal vectors ***H^{k}.*** Thus, by activating the *k*-th row, the circuit block 302 is configured to perform the multiplications ${x}_{1} \times {h}_{1}^{k}$ and ${x}_{2} \times {h}_{2}^{k}$*.* The input values ***x*₁** and *x*₂ being encoded by currents and the values ${h}_{1}^{k}$ and ${h}_{2}^{k}$ being encoded by the resistances of the resistive elements, the outputs are for example voltages, wherein an output voltage ***Va*₁** of the circuit block 302 is equal to the product ${x}_{1} \times {h}_{1}^{k}$ and an output voltage ***Va*₂** of the circuit block 302 is equal to the product ${x}_{2} \times {h}_{2}^{k}$.

In the general case, where the input data vector ***X*** and the horizontal vectors ***H^{k}*** are each of size ***n*** and where the neural network implements ***K*** models, the circuit block 302 for example comprises ***n*** input lines receiving the input currents and ***K*** input voltage lines receiving the voltages ***Vl^{k},*** for **1 ≤ *k* ≤ *K.*** In this case, the circuit block 302 is configured to output, for a model ***k*** selected by the activation of the voltage ***Vl^{k},*** a number ***n*** of output voltage values, encoding the products ${x}_{m} \times {h}_{m}^{k}$, for **1 ≤ *m* ≤ *n.***

The circuit block 304 in the example of Figure 3 is formed of a cross-bar array comprising two rows and two columns. In particular, the circuit block 304 models a matrix multiplication operation by the shared matrix ***S*.** The circuit block 304 for example comprises **2 × 2** resistive elements (not illustrated in Figure 3). The resistive element in an i-th row and ***j***-th column of the cross-bar array for example has a resistance of **1/*s_{i,j}*** ohms corresponding to a conductance of ***s_{i,j}*** siemens. The circuit block 304 receives, on corresponding input lines, the voltages ***Va*₁** and ***Va*₂** generated by the circuit block 302 and is configured to output two current values ***Ib*₁** and ***Ib*₂.** The output current ***Ib*₁** encodes the value ${s}_{1 , 1} \left({h}_{1}^{k}\times {x}_{1}\right) + {s}_{1 , 2} \left({h}_{2}^{k}\times {x}_{2}\right)$*,* and the output current ***Ib*₂** encodes the value ${s}_{2 , 1} \left({h}_{1}^{k}\times {x}_{1}\right) + {s}_{2 , 2} \left({h}_{2}^{k}\times {x}_{2}\right)$*,* where ***k*** refers to the model being executed. In some embodiments, the circuit block 304 also receives an enable input signal EN, generated by the control circuit 310 for activating the circuit block 304 when an inference operation is to be performed. For example, the enable signal is active high, and is set to a maximum supply voltage, such as VDD, of the circuit during inference operations.

The circuit block 306 is similar to the circuit block 302 and is configured to receive, on respective input lines, the currents ***Ib*₁** and ***Ib*₂.** The circuit block 306 is configured to perform multiplications of the values encoded by the currents ***Ib*₁** and ***Ib*₂** with the elements of a selected one of the vertical vectors ***V^{k}.*** The circuit block 306 for example receives, on corresponding input lines, the selection voltages ***Vl*¹, *Vl*²** and ***Vl*³,** and is for example configured to select the vertical vector ***V^{k}*** associated with model ***k*** in a similar fashion to the circuit block 302, by setting the voltage input ***Vl^{k}*** to an activated level, such as the supply voltage Vdd, and setting the other voltage inputs to a deactivated level, such as to the ground voltage.

The circuit block 306 further comprises resistive elements (not illustrated in Figure 3) encoding the coefficients of each of the vertical vectors ***V^{k}.*** When the voltage ***Vl*¹** is set to the activated level and the other voltages are set to ground, the circuit block 306 is configured to output voltages ***Vc*₁** and ***Vc*₂** encoding the output values ${y}_{1}^{1}$ and ${y}_{2}^{1}$ respectively. In particular, for each model k, the output values ${y}_{1}^{k}$ and ${y}_{2}^{k}$ are such that: $\begin{matrix}{y}_{1}^{k} = {V}_{top} - Vc 1 = {v}_{1}^{k} \times Ib 1 = {v}_{1}^{k} \times \left({s}_{1 , 1}\left({h}_{1}^{k}\times {x}_{1}\right)+{s}_{1 , 2}\left({h}_{2}^{k}\times {x}_{2}\right)\right) ; \\ {y}_{2}^{k} = {V}_{top} - Vc 2 = {v}_{2}^{k} \times Ib 2 = {v}_{2}^{k} \times \left({s}_{2 , 1}\left({h}_{1}^{k}\times {x}_{1}\right)+{s}_{2 , 2}\left({h}_{2}^{k}\times {x}_{2}\right)\right) .\end{matrix}$

The control circuit 310 for example receives the input data values ***x*₁** and ***x*₂,** for example as digital signals, and generates the currents ***I*₁** and ***I*₂** based on the input data values ***x*₁** and ***x*₂,** for example using a digital to analog converter (DAC). The control circuit 310 also for example receives a clock signal CLK, and generates the control voltages ***Vl*¹, *Vl*²** and ***Vl*³** such that the k models are applied in sequence to the input data values.

The circuit block 306 is for example coupled to an analog to digital converter 312 (ADC) configured to convert the output voltages ***Vc*₁** and ***Vc*₂** into the voltage values ${y}_{1}^{k}$ and ${y}_{2}^{k}$ in the digital domain.

The resistive elements described herein are for example non-volatile programmable resistive devices. The manner in which such devices are programmed depends on the particular technology. Once programmed, the resistance of the element remains relatively constant over time. For example, suitable types of programmable resistive elements include:
- PCM (phase change memory) memory elements - see for example the publication by La Barbera, Selina, et al. "Narrow Heater Bottom Electrode-Based Phase Change Memory as a Bidirectional Artificial Synapse", Adv. Electron. Mater. 2018, 4, 1800223;
- OxRAM (Oxide RAM) memory elements - see for example the publication by H.S. Philip Wong et al. entitled "Metal-Oxide RRAM", Proceedings of the IEEE, 2012; and/or
- CBRAM (Conductive Bridging RAM) memory elements - see for example the publication by D. Jana et al. entitled "Conductive-bridging random access memory: challenges and opportunity for 3D architecture", Nanoscale Research Letters, 2015.

The resistances of the resistive elements of the circuit blocks 302, 304 and 306 are for example programmed during a programming phase. For example, the resistance values are determined during a training phase of the neural network.

In operation, during inference based on given input data values ***x*₁** and ***x*₂,** the circuit 300 of Figure 3 is operated over k cycles, and during each cycle a corresponding one of the control voltages ***Vl*¹, *Vl*²** and ***Vl*³** is activated in order to generate the output values ${y}_{1}^{k}$ and ${y}_{2}^{k}$ for each model k. During each cycle for a given value of k, the input data values ***x*₁** and ***x*₂** and the control voltages ***Vl*¹, *Vl*²** and ***Vl*³** are for example maintained constant for a settling time period to allow the output values ${y}_{1}^{k}$ and ${y}_{2}^{k}$ to settle at their final levels before the start of the subsequent cycle.

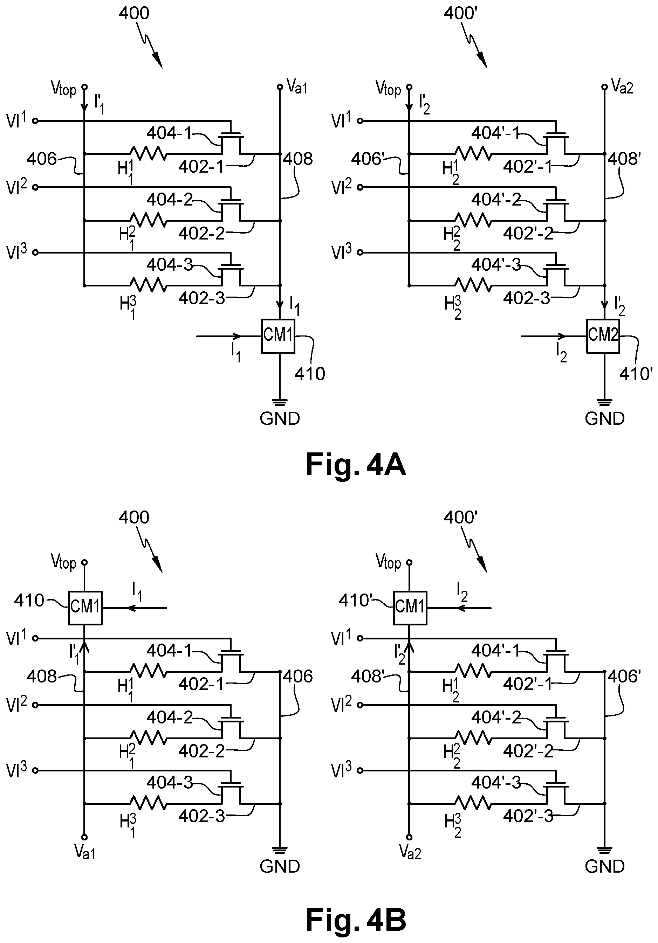

Figure 4A schematically illustrates a vector multiplier circuit according to an embodiment of the present disclosure. For example, the circuit of Figure 4A implements the circuit block 302 of Figure 3. The multiplier circuit for example comprises two sub-circuits 400 and 400' respectively configured to compute the output voltage ***Va*₁** based on the input data value ***x*₁** represented by the current ***I*₁** and the output voltage ***Va*₂** based on the input data value ***x*₂** represented by the current ***I*₂.**

The sub-circuit 400 comprises conductive branches 402_1, 402_2 and 402_3. Each conductive branch 402_k, **1 ≤ *k* ≤ 3,** comprises a resistive element ${H}_{1}^{k}$*,* the resistance of which is programmed to encode the value ${h}_{1}^{k}$ of the horizontal vector ***H^{k}.*** Moreover, each conductive branch 402_k, **1 ≤ *k* ≤ 3,** further comprises a transistor 404_k coupled in series with the resistive element ${H}_{1}^{k}$. For example, the gates of the transistors 404_k, **1 ≤ *k* ≤ 3,** are respectively coupled to a corresponding control line receiving the corresponding voltage ***Vlₖ.*** The conductive branches 402_k, **1 ≤ *k* ≤ 3,** are respectively coupled between a common voltage rail 406 supplied by a voltage ***Vₜₒₚ*** and a common output line 408. The common output line 408 is configured to conduct a current ***I'*₁.** For example, the current ***I'*₁** is imposed on the common output line 408 by a current mirror 410 (CM1) coupled to a ground rail (GND) and having one of its branches coupled to the line 408, and its reference branch coupled to a line conducting the current ***I*₁** encoding the value of the input data ***x*₁.** The current ***I*₁'** is for example equal to, or proportional to, the current ***I*₁.**

Similarly, the sub-circuit 400' comprises conductive branches 402'_1, 402'_2 and 402'_3. Each conductive branch 402'_k, **1 ≤ *k* ≤ 3,** comprises a resistive element ${H}_{2}^{k}$, the resistance of which is programmed to encode the value ${h}_{2}^{k}$ of the horizontal vector ***H^{k}.*** Moreover, each conductive branch 402'_k, **1 ≤ *k* ≤ 3,** further comprises a transistor 404'_k coupled in series with the resistive element ${H}_{2}^{k}$*.* For example, the gates of the transistors 404'_k, **1 ≤ *k* ≤ 3**, are respectively coupled to a corresponding control line receiving the corresponding voltage ***Vlₖ.*** The conductive branches 402'_k, **1 ≤ *k* ≤ 3,** are respectively coupled between a common voltage rail 406' supplied by the voltage ***Vₜₒₚ*** and a common output line 408'. The common output line 408' is configured to conduct a current ***I'*₂.** For example, the current ***I'*₂** is imposed on the common output line 408' by a current mirror 410' (CM2) coupled to the ground rail (GND) and having one of its branches coupled to the line 408', and its reference branch coupled to a line conducting the current ***I*₂** encoding the value of the input data ***x*₂.** The current ***I*₂*'*** is for example equal to, or proportional to, the current ***I*₂.**

In operation, in order to perform the multiplications ${h}_{1}^{1} {x}_{1}$ and ${h}_{2}^{1} {x}_{2}$, the transistors 404_1 and 404'_1 are rendered conductive by the control circuit 310 by setting voltage ***Vl*¹** to the activated level. The transistors 404_2, 404'_2, 404_3 and 404'_3 are rendered non-conductive by setting the voltages ***Vl*²** and ***Vl*³** to the deactivated level. The voltage on lines 408 and 408' will then be equal to ***Va*₁** and ***Va*₂** respectively, where $V {a}_{1} = {V}_{top} - {h}_{1}^{1} {x}_{1}$*Va*₁ and $V {a}_{2} = {V}_{top} - {h}_{2}^{1} {x}_{2}$*.* The multiplications ${h}_{1}^{2} {x}_{1}$***,*** ${h}_{2}^{2} {x}_{2}$*,* and ${h}_{1}^{3} {x}_{1} , {h}_{2}^{3} {x}_{2}$*,* can be performed in a similar manner by activating the voltages ***Vl*²** and ***Vl*³** respectively.

Thus, in the column vector multiplier circuit of Figure 4A, the number of conductive branches 402, 402' of each sub-circuit 400, 400' is equal to the number of models K to be implemented. In the case where the input data is of size ***n*,** each sub-circuit 400, 400' of the multiplier circuit comprises a number ***n*** of sub-circuits, each having a similar implementation to the sub-circuits 400 and 400'.

In each of the conductive branches 402_k, 402_k, **1 ≤ *k* ≤ 3,** of Figure 4A, the transistors 404_k and 404'_k are placed between the resistive element of the conductive branch and the output line 408 or 408'. In another embodiment, transistors 404_k and 404'_k, **1 ≤ *k* ≤ 3,** are placed between the voltage rail 406 or 406' and the resistive elements.

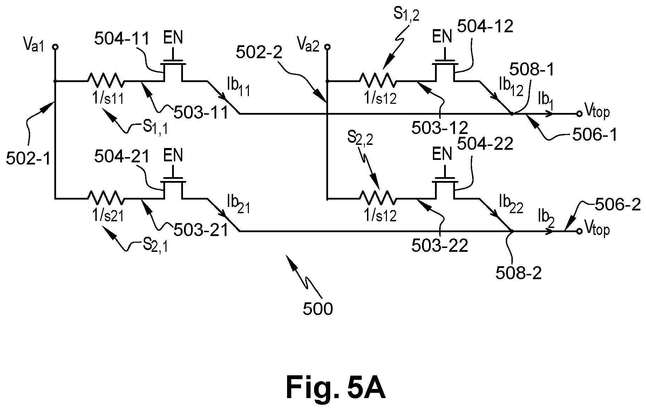

Figure 4B schematically illustrates a vector multiplier circuit according to an alternative embodiment to that of Figure 4A. In particular, Figure 4B illustrates the sub-circuits 400, 400' of Figure 4A according to an alternative in which the common conductive lines 406, 406' are connected to the ground rail GND rather than to the voltage rail Vtop, and the current mirrors 410, 410' (CM1, CM2) are connected to the voltage rail Vtop rather than to the ground rail GND. In this case, when a kth model is selected using the voltages ***Vl*¹** to ***Vl*³,** the voltages on lines 408 and 408' will this be equal to ***Va*₁** and ***Va*₂** respectively, where ${Va}_{1} = {h}_{1}^{k} {x}_{1}$ and ${Va}_{2} = {h}_{2}^{k} {x}_{2}$*.* In the example illustrated by Figure 4B, the currents from the crossbar circuit of circuit block 304 are copied and the copied currents are supplied to the circuit block 306. Figure 5A schematically illustrates a crossbar array circuit 500, which is one example of a possible implementation of the circuit block 304 of Figure 3.

The crossbar array circuit 500 comprises input voltage lines 502_1 and 502_2, respectively coupled for example to the output voltage lines 408, 408' of Figure 4A or 4B in order to receive the voltages ***Va*₁** and ***Va*₂** respectively.

The crossbar array circuit 500 comprises:
- a first conductive branch 503_11 comprising the series connection of a resistive element ***S*_{1,1}** and a transistor 504_11 coupled between the input voltage line 502_1 and a first output current line 506_1;
- a second conductive branch 503_12 comprising the series connection of a resistive element ***S*_{1,2}** and a transistor 504_12 coupled between the input voltage line 502_2 and the first output current line 506_1;
- a third conductive branch 503_21 comprising the series connection of a resistive element ***S*_{2,1}** and a transistor 504_21 coupled between the input voltage line 502_1 and a second output current line 506_2; and
- a fourth conductive branch 503_22 comprising the series connection of a resistive element ***S*_{2,2}** and a transistor 504_22 coupled between the input voltage line 502_2 and the second output current line 506_2.

The transistors 504-11, 504-12, 504-21 and 504-22 are for example controlled by the enable signal EN. When in the activated state, the voltage level of the activated state of the enable signal is for example chosen to be relatively high, such as at the supply voltage Vdd of the circuit, in order to obtain a relatively low ON resistance Ron of the transistors 504-11, 504-12, 504-21 and 504-22.

Each of the resistive elements ***S*_{*i*,*j*},** for **1 ≤ *i* ≤ 2** and **1 ≤ *j* ≤ 2,** encodes, for example, the inverse **1/*s_{i,j}*** of the coefficients of the shared matrix ***S*.**

In the case that the circuit block 302 supplying the voltages ***Va*₁** and ***Va*₂** is the one of Figure 4A, the output lines 506_1 and 506_2 are for example tied to the voltage level Vtop, such that the current ***Ib*₁** generated by the common output line 506_1, and the current ***Ib*₂** generated by the common output line 506_2, are such that: $\begin{matrix}{Ib}_{1} = \left({V}_{top}-{Va}_{1}\right) \times {s}_{1 , 1} + \left({V}_{top}-{Va}_{2}\right) \times {s}_{1 , 2} = {x}_{1} {h}_{1}^{1} {s}_{1 , 1} + {x}_{2} {h}_{2}^{1} {s}_{1 , 2} , \\ {Ib}_{2} = \left({V}_{top}-{Va}_{1}\right) \times {s}_{2 , 1} + \left({V}_{top}-{Va}_{2}\right) \times {s}_{2 , 2} = {x}_{1} {h}_{1}^{1} {s}_{2 , 1} + {x}_{2} {h}_{2}^{1} {s}_{2 , 2} .\end{matrix}$

Alternatively, in the case that the circuit block 302 supplying the voltages ***Va*₁** and ***Va*₂** is the one of Figure 4B, the output lines 506_1 and 506_2 are for example tied to ground voltage GND, such that the current ***Ib*₁** generated by the common output line 506_1, and the current ***Ib*₂** generated by the common output line 506_2, are such that: $\begin{matrix}{Ib}_{1} = {Va}_{1} \times {s}_{1 , 1} + {Va}_{2} \times {s}_{1 , 2} = {x}_{1} {h}_{1}^{1} {s}_{1 , 1} + {x}_{2} {h}_{2}^{1} {s}_{1 , 2} , \\ {Ib}_{2} = {Va}_{1} \times {s}_{2 , 1} + {Va}_{2} \times {s}_{2 , 2} = {x}_{1} {h}_{1}^{1} {s}_{2 , 1} + {x}_{2} {h}_{2}^{1} {s}_{2 , 2} .\end{matrix}$

In the case where the input and output data is of size ***n,*** the circuit 500 for example comprises ***n*** common output lines each coupled, via ***n*** branches 503, to ***n*** input voltage lines ***Vₐⱼ,* 1 ≤ *j* ≤ *n.***

In Figure 5A, each transistor 504_ij, **1 ≤ *i*,*j* ≤ 2,** is placed between the resistive element ***S*_{*i*,*j*}** and the common output line 506_i. In another example embodiment, the order of the transistor and the resistive element in each branch is switched, such that each transistor 504_ij, **1 ≤ *i, j* ≤ 2,** is placed between the input line 502_j and the resistive element ***S_{i,j}.***

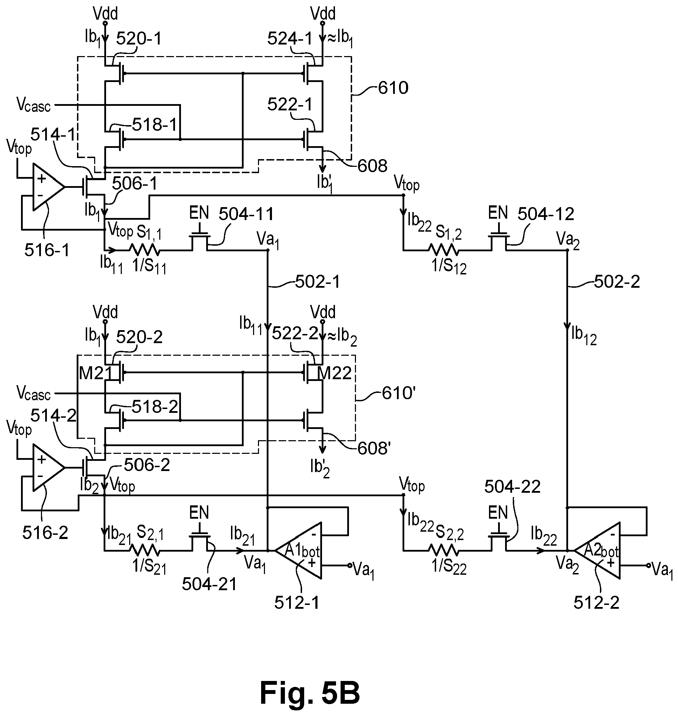

Figure 5B schematically illustrates the crossbar array circuit of Figure 5A, and an example of transition circuitry providing an interface with the circuit blocks 302 and 306.

For example, in order to impose the voltage ***Va*₁** on the input line 502_1, an operational amplifier 512_1 **(*A*1*_{bot}*)** is provided, having its positive input coupled to the output line 408 of the sub-circuit 400, and its negative input and output coupled to the input line 502_1. Similarly, in order to impose the voltage ***Va*₂** at the input line 502_2, an operational amplifier 512_2 **(*A*2*_{bot}*)** is provided, having its positive input coupled to the output node 408' of the sub-circuit 400', and its negative input and output coupled to the input line 502_2.

In order to impose the voltage Vtop on the output line 506_1, a transistor 514_1 is for example coupled between the output line 506_1 and the supply voltage rail Vdd, and an operational amplifier 516_1 is for example arranged to have its positive input coupled to the output line 506_1, its negative input coupled to the voltage rail Vtop, and its output coupled to the gate of the transistor 514_1. Similarly, in order to impose the voltage Vtop on the output line 506_2, a transistor 514_2 is for example coupled between the output line 506_2 and the supply voltage rail Vdd, and an operational amplifier 516_2 is for example arranged to have its positive input coupled to the output line 506_2, its negative input coupled to the voltage rail Vtop, and its output coupled to the gate of the transistor 514_2.

In order to generate an output current ***Ib*₁*'*** for driving the circuit block 306 based on the current ***Ib*₁,** a current mirror 610 is for example provided. A reference branch of the current mirror 610 comprises PMOS transistors 518_1 and 520_1 coupled in series via their source/drain nodes between the transistor 514_1 and the supply voltage rail Vdd. A current duplication branch of the current mirror 610 comprises PMOS transistors 522_1 and 524_1 coupled in series via their source/drain nodes between an output line 608 and the Vdd supply voltage rail. The gates of the transistors 518_1 and 522_1 are for example coupled together and to a biasing voltage Vcasc. The gates of the transistors 520_1 and 524_1 are for example coupled together and to an intermediate node between the transistors 518_1 and 514_1.

Similarly, in order to generate an output current ***Ib*₂*'*** for driving the circuit block 306 based on the current ***Ib*₂,** a current mirror 610' is for example provided. A reference branch of the current mirror 610' comprises PMOS transistors 518_2 and 520_2 coupled in series via their source/drain nodes between the transistor 514_2 and the supply voltage rail Vdd. A current duplication branch of the current mirror 610' comprises PMOS transistors 522_2 and 524_2 coupled in series via their source/drain nodes between an output line 608' and the Vdd supply voltage rail. The gates of the transistors 518_2 and 522_2 are for example coupled together and to the biasing voltage Vcasc. The gates of the transistors 520_2 and 524_2 are for example coupled together and to an intermediate node between the transistors 518_2 and 514_2.

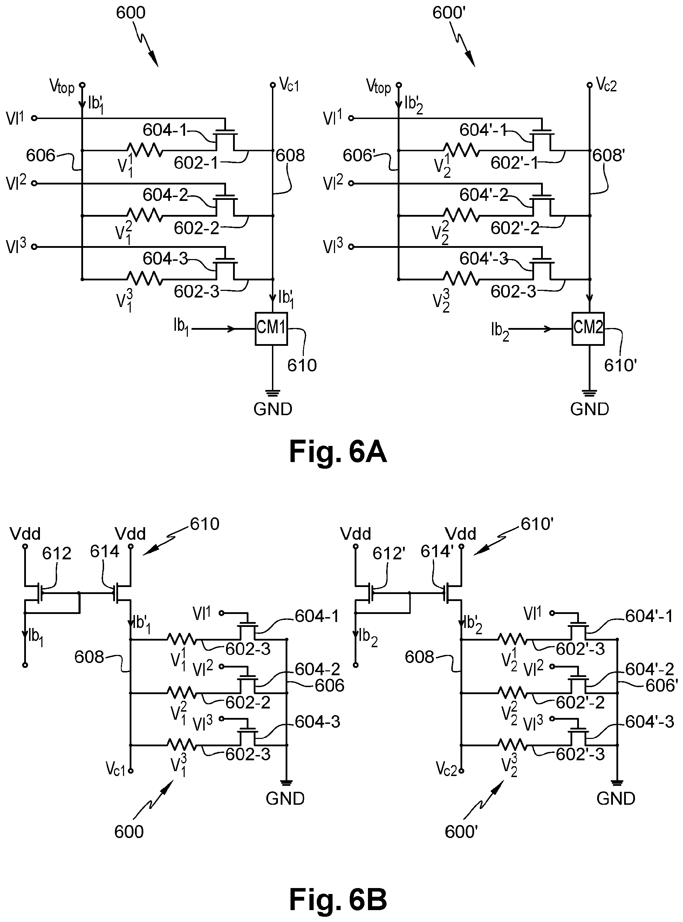

Figure 6A schematically illustrates a vector multiplier circuit according to an embodiment of the present disclosure. For example, the circuit of Figure 6A provides an example implementation of the circuit block 306 of Figure 3. This multiplier circuit for example comprises two sub-circuits 600 and 600', which are for example similar to the sub-circuits 400 and 400' respectively of Figure 4A. The sub-circuits 600 and 600' are configured to implement the multiplications with the coefficients of the vertical vectors ***V*¹, *V*²** and ***V*³.**

The sub-circuit 600 comprises conductive branches 602_1, 602_2 and 602_3. Each conductive branch 602_k, **1 ≤ *k* ≤ 3,** comprises a resistive element ${V}_{1}^{k}$*,* the resistance of which is programmed to encode the value ${v}_{1}^{k}$ of the vertical vector ***V^{k}.*** Moreover, each conductive branch 602_k, **1 ≤ *k* ≤ 3,** further comprises a transistor 604_k coupled in series with the resistive element ${V}_{1}^{k}$. For example, the gates of the transistors 604_k, **1 ≤ *k* ≤ 3,** are respectively coupled to a corresponding control line receiving the corresponding voltage ***Vlₖ.*** The conductive branches 602_k, **1 ≤ *k* ≤ 3,** are respectively coupled between a common voltage rail 606 supplied by the voltage ***Vₜₒₚ*** and the common output line 608 providing an output voltage ***Vc*₁** of the circuit. The common output line 608 is configured to conduct the current ***Ib*₁',** which is for example the mirror of the current ***Ib*₁** generated by the circuit block 304. For example, the current ***Ib*₁*'*** is imposed on the common output line 608 by the current mirror 610 (CM1) described in relation with Figure 5B, which is coupled to the ground rail (GND) and has one of its branches coupled to the line 608, and its reference branch coupled to the output line 506_1 of the crossbar array circuit 500 of Figure 5A conducting the current ***Ib*₁.**

Similarly, the sub-circuit 600' comprises conductive branches 602'_1, 602'_2 and 602'_3. Each conductive branch 602'_k, **1 ≤ *k* ≤ 3,** comprises a resistive element ${V}_{2}^{k}$*,* the resistance of which is programmed to encode the value ${v}_{2}^{k}$ of the vertical vector ***V^{k}.*** Moreover, each conductive branch 602'_k, **1 ≤ *k* ≤ 3,** further comprises a transistor 604'_k coupled in series with the resistive element ${V}_{2}^{k}$*.* For example, the gates of the transistors 604'_k, **1 ≤ *k* ≤ 3**, are respectively coupled to a corresponding control line receiving the corresponding voltage ***Vlₖ.*** The conductive branches 602'_k, **1 ≤ *k* ≤ 3,** are respectively coupled between a common voltage rail 606' supplied by the voltage ***Vₜₒₚ*** and the common output line 608' providing an output voltage ***Vc*₂** of the circuit. The common output line 608' is configured to conduct the current ***Ib*₂*'*,** which is for example the mirror of the current ***Ib*₂** generated by the circuit block 304. For example, the current ***Ib*₂*'*** is imposed on the common output line 608' by the current mirror 610' (CM2) described in relation with Figure 5B, which is coupled to the ground rail (GND) and has one of its branches coupled to the line 608', and its reference branch coupled to the output line 506_2 of the crossbar array circuit 500 of Figure 5A conducting the current ***Ib*₂.**

The voltages ***Vc*₁** and ***Vc*₂** outputted by sub-circuits 600 and 600' are for example such that, when voltage ***Vl^{k},* 1 *≤ k* ≤ 3** is set to activated, for example to Vdd, and the other voltages set to the ground level: $\begin{matrix}{V}_{top} - {V}_{c 1} = {v}_{1}^{k} Ib 1 = {v}_{1}^{k} \left({x}_{1}{h}_{1}^{k}{s}_{1 , 1}+{x}_{2}{h}_{2}^{k}{s}_{1 , 2}\right) = {y}_{1}^{k} , \\ {V}_{top} - {V}_{c 2} = {v}_{2}^{k} Ib 2 = {v}_{2}^{k} \left({x}_{1}{h}_{1}^{k}{s}_{2 , 1}+{x}_{2}{h}_{2}^{k}{s}_{2 , 2}\right) = {y}_{2}^{k} .\end{matrix}$

In the line vector multiplier circuit of Figure 6A, the number of conductive branches 602, 602' of each sub-circuit 600, 600' is equal to the number of models K to be implemented. In the case where the input data is of size ***n*,** each sub-circuit 600, 600' of the multiplier circuit comprises a number ***n*** of sub-circuits, each having a similar implementation to the sub-circuits 600 and 600'.

In each of the conductive branches 602_k, 602'_k, **1 ≤ *k* ≤ 3,** of Figure 6A, the transistors 604_k and 604'_k are placed between the resistive element of the conductive branch and the output line 608 or 608'. In another embodiment, transistors 604_k and 604'_k, **1 ≤ *k* ≤ 3,** are placed between the voltage rail 606 or 606' and the resistive elements.

Figure 6B schematically illustrates a vector multiplier circuit according to a further embodiment of the present disclosure. In particular, Figure 6B illustrates an alternative to the circuit block of Figure 6A in which the common conductive lines 606, 606' are connected to the ground rail GND rather than to the voltage rail Vtop, and the current mirrors 610, 610' are connected to the voltage rail Vdd rather than to the ground rail GND.

Furthermore, example implementations of the current mirrors 610, 610' are illustrated in Figure 6B.

The current mirror 610 for example comprises PMOS transistors 612 and 614. The PMOS transistor 612 forms a reference branch of the current mirror, and has its source connected to the Vdd supply voltage rail and its drain coupled to its gate and to the current input line receiving the current ***Ib*₁.** The PMOS 614 forms a current duplication branch of the current mirror, and has its source connected to the Vdd supply voltage rail, its drain coupled to the output line 608, and its gate connected to the gate of the PMOS transistor 612.

Similarly, the current mirror 610' for example comprises PMOS transistors 612' and 614'. The PMOS transistor 612' forms a reference branch of the current mirror, and has its source connected to the Vdd supply voltage rail and its drain coupled to its gate and to the current input line receiving the current ***Ib*₂.** The PMOS 614' forms a current duplication branch of the current mirror, and has its source connected to the Vdd supply voltage rail, its drain coupled to the output line 608', and its gate connected to the gate of the PMOS transistor 612'.

With respect to the implementation of Figure 6A, the implementation of Figure 6B allows the output voltages, generated by the sub-circuits 600 and 600', to be referenced with respect to the ground and avoids the subtraction of the output voltage from the voltage ***Vₜₒₚ.***

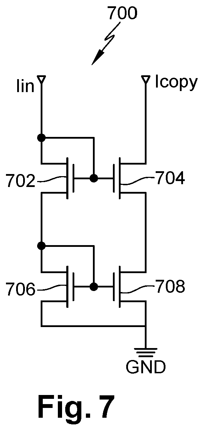

Figure 7 is an example of a current mirror circuit 700, and provides a possible implementation of each of the current mirrors 410, 410' of Figures 4A and 4B and of the current mirrors 610, 610' of Figure 6A.

The circuit 700 comprises a reference branch comprising transistors 702 and 706 coupled in series via their source and drain nodes between a current input line Iin and the ground voltage rail GND. The gates of the transistors 702, 706 are coupled to their drains.

The circuit 700 further comprises a further branch comprising transistors 704 and 708 coupled in series via their source and drain nodes between a current output line Icopy and the ground voltage rail GND. The gates of the transistors 704 and 708 are respectively connected to the gates of the transistors 702 and 706.

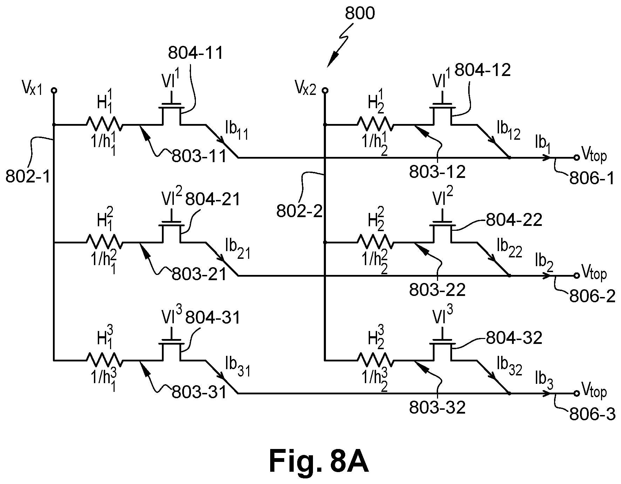

Figure 8A is another example of a crossbar array circuit 800, according to an embodiment of the present disclosure. In particular, the circuit 800 implements a crossbar array circuit for a BatchEnsemble algorithm without shared matrix. For example, in the case where the shared matrix ***S*** is equal to the identity matrix, the output data ***Y*¹, *Y*², *Y*³** are then, respectively, equal to **(*H*¹ ⊗ *V*¹) · *X*, (*H*² ⊗ *V*²)** · ***X*** and **(*H*³ ⊗ *V*³) · *X.*** In other words, for each **1 ≤ *k* ≤ 3,** the output data is such that: $\begin{matrix}{y}_{1}^{k} = {v}_{1}^{k} \times \left({h}_{1}^{k}\times {x}_{1}+{h}_{2}^{k}\times {x}_{2}\right) ; \\ {y}_{2}^{k} = {v}_{2}^{k} \times \left({h}_{1}^{k}\times {x}_{1}+{h}_{2}^{k}\times {x}_{2}\right) .\end{matrix}$

With reference to Figure 3, this means that the circuit blocks 302 and 304 can be replaced by the crossbar circuit 800, which is configured to generate the values $\left({h}_{1}^{k}\times {x}_{1}+{h}_{2}^{k}\times {x}_{2}\right)$*.* In particular, the crossbar array circuit 800 comprises three output current lines 806_1, 806_2 and 806_3, and each of these lines is configured to supply a current ***Ib*₁, *Ib*₂** and ***Ib*₃,** respectively corresponding to the values ${h}_{1}^{1} \times {x}_{1} + {h}_{2}^{1} \times {x}_{2} , {h}_{1}^{2} \times {x}_{1} + {h}_{2}^{2} \times {x}_{2}$ and ${h}_{1}^{3} \times {x}_{1} + {h}_{2}^{3} \times {x}_{2}$.

The input value ***x*₁** is for example supplied in the form of a voltage ***Vx*₁** on a voltage input line 802_1, and the input value ***x*₂** is for example supplied in the form of a voltage ***Vx*₂** on a voltage input line 802_2.

The circuit 800 for example comprises six conductive branches:
- a first conductive branch 803_11 comprising the series connection of a resistive element ${H}_{1}^{1}$ and a transistor 804_11 coupled between the input voltage line 802_1 and the output current line 806_1, the resistive element ${H}_{1}^{1}$ being programmed to have a resistance representing the inverse $1 / {h}_{1}^{1}$ of the horizontal vector value ${h}_{1}^{1}$ and the transistor 804_11 being controlled at its gate by the voltage ***Vl*¹***;*
- a second conductive branch 803_12 comprising the series connection of a resistive element ${H}_{2}^{1}$ and a transistor 804_12 coupled between the input voltage line 802_2 and the first output current line 806_1, the resistive element ${H}_{2}^{1}$ being programmed to have a resistance representing the inverse $1 / {h}_{2}^{1}$ of the horizontal vector value ${h}_{2}^{1}$, the transistors 804_11 and 804_12 being controlled at their gates by the voltage ***Vl*¹;**
- a third conductive branch 803_21 comprising the series connection of a resistive element ${H}_{1}^{2}$ and a transistor 804_21 coupled between the input voltage line 802_1 and the second output current line 806_2, the resistive element ${H}_{1}^{2}$ being programmed to have a resistance representing the inverse $1 / {h}_{1}^{2}$ of the horizontal vector value ${h}_{1}^{2}$;
- a fourth conductive branch 803_22 comprising the series connection of a resistive element ${H}_{2}^{2}$ and a transistor 804_22 coupled between the input voltage line 802_2 and the second output current line 806_2, the resistive element ${H}_{2}^{2}$ being programmed to have a resistance representing the inverse $1 / {h}_{2}^{2}$ of the horizontal vector value ${h}_{2}^{2}$, the transistors 804_21 and 804_22 being controlled at their gates by the voltage *Vl*²;
- a fifth conductive branch 803_31 comprising the series connection of a resistive element ${H}_{1}^{3}$ and a transistor 804_31 coupled between the input voltage line 802_1 and a third output current line 806_3, the resistive element ${H}_{1}^{3}$ being programmed to have a resistance representing the inverse $1 / {h}_{1}^{3}$ of the horizontal vector value ${h}_{1}^{3}$; and
- a sixth conductive branch 803_32 comprising the series connection of a resistive element ${H}_{2}^{3}$ and a transistor 804_32 coupled between the input voltage line 802_2 and the third output current line 806_3, the resistive element ${H}_{2}^{3}$ being programmed to have a resistance representing the inverse $1 / {h}_{2}^{3}$ of the horizontal vector value ${h}_{2}^{3}$, the transistors 804_31 and 804_32 being controlled at their gates by the voltage ***Vl*³.**

For each **1 ≤ *k* ≤ 3,** each branch 803_ki provides a current ***Ib*_{*k*1}** and ***Ib*_{*k*2}.** Each resistive element 806_ki is for example programmed to the value $1 / {h}_{i}^{k}$ and is supplied by voltage encoding the input value ***xᵢ*.**

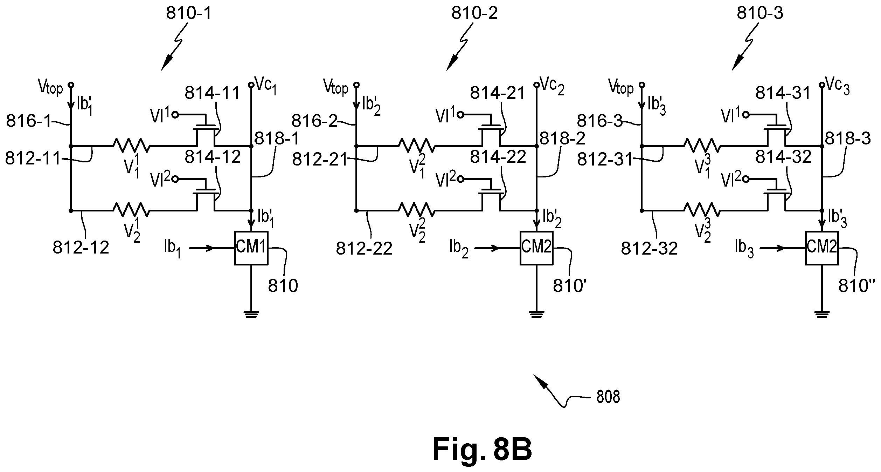

Figure 8B is another example of a vector line multiplier circuit 808. In particular, the circuit 808 is for example coupled to the circuit 800 in order to perform the multiplication by the vertical vectors ***V^{k}.*** The circuit 808 is for example implemented when the shared matrix ***S*** is equal to the identity matrix.

The multiplier circuit 808 is for example similar to the multiplier circuit of Figure 6A, except that, rather than two sub-circuits, it comprises three sub-circuits 810_1 810_2 and 810_3. Each sub-circuit 810_k, **1 ≤ *k* ≤ 3,** correspond to the multiplication of the corresponding output current ***Ibₖ*** of the circuit 800 with the vertical vector ***V^{k}.*** In other words, each sub-circuit 810_k is configured to perform a multiplication by a vertical vector ***V^{k}*** associated to a model.

The sub-circuit 810_1 comprises conductive branches 812_11 and 812_12. Each conductive branch 812_1i, **1 ≤ *i* ≤ 2,** comprises a resistive element ${V}_{i}^{1}$, the resistance of which is programmed to encode the value ${v}_{i}^{1}$ of the vertical vector ***V*¹.** Moreover, each conductive branch 812_1i, **1 ≤ *i* ≤ 2,** further comprises a transistor 814_11 coupled in series with the resistive element ${V}_{i}^{1}$. For example, the gates of the transistors 814_1i, **1 ≤ *i* ≤ 2,** are respectively coupled to a corresponding control line receiving the corresponding voltage ***Vlⁱ.*** The conductive branches 812_1i, **1 ≤ *i* ≤ 2,** are respectively coupled between a common voltage rail 816_1 supplied by the voltage ***Vₜₒₚ*** and a common output line 818_1 providing an output voltage ***Vc*₁** of the circuit. The common output line 818_1 is configured to conduct a current ***Ib*₁*',*** which is for example the mirror of the current ***Ib*₁** generated by the circuit 800. For example, the current ***Ib*₁*'*** is imposed on the common output line 818_1 by a current mirror 810 (CM1) coupled to the ground rail (GND) and having one of its branches coupled to the line 818_1, and its reference branch coupled to the output line 806_1 of the circuit 800 of Figure 8A conducting the current ***Ib*₁.**

Similarly, the sub-circuit 810_2 comprises conductive branches 812_21 and 812_22. Each conductive branch 812_2i, **1 ≤ *i* ≤ 2,** comprises a resistive element ${V}_{i}^{2}$, the resistance of which is programmed to encode the value ${v}_{i}^{2}$ of the vertical vector ***V*².** Moreover, each conductive branch 812_2i, **1 ≤ *i* ≤ 2,** further comprises a transistor 814_2i coupled in series with the resistive element ${V}_{i}^{2}$. For example, the gates of the transistors 814_2i, **1 ≤ *i* ≤ 2,** are respectively coupled to a corresponding control line receiving the corresponding voltage ***Vlⁱ.*** The conductive branches 812_2i, **1 ≤ *i* ≤ 2,** are respectively coupled between a common voltage rail 816_2 supplied by the voltage ***Vₜₒₚ*** and a common output line 818_2 providing an output voltage ***Vc*₂** of the circuit. The common output line 818_2 is configured to conduct a current ***Ib*₂*',*** which is for example the mirror of the current ***Ib*₂** generated by the circuit 800. For example, the current ***Ib*₂*'*** is imposed on the common output line 818_2 by a current mirror 810' (CM2) coupled to the ground rail (GND) and having one of its branches coupled to the line 818_2, and its reference branch coupled to the output line 806_2 of the circuit 800 of Figure 8A conducting the current ***Ib*₂.**

Similarly, the sub-circuit 810_3 comprises conductive branches 812_31 and 812_32. Each conductive branch 812_3i, **1 ≤ *i* ≤ 2,** comprises a resistive element ${V}_{i}^{3}$, the resistance of which is programmed to encode the value ${v}_{i}^{3}$ of the vertical vector ***V*³.** Moreover, each conductive branch 812_3i, 1 **≤ *i* ≤ 2,** further comprises a transistor 814_3i coupled in series with the resistive element ${V}_{i}^{3}$*.* For example, the gates of the transistors 814_3i, **1 ≤ *i* ≤ 2,** are respectively coupled to a corresponding control line receiving the corresponding voltage ***Vlⁱ.*** The conductive branches 812_3i, **1 ≤ *i* ≤ 2,** are respectively coupled between a common voltage rail 816_3 supplied by the voltage ***Vₜₒₚ*** and a common output line 818_3 providing an output voltage ***Vc*₃** of the circuit. The common output line 818_3 is configured to conduct a current ***Ib*₃*',*** which is for example the mirror of the current ***Ib*₃** generated by the circuit 800. For example, the current ***Ib*₃*'*** is imposed on the common output line 818_3 by a current mirror 810" (CM3) coupled to the ground rail (GND) and having one of its branches coupled to the line 818_3, and its reference branch coupled to the output line 806_3 of the circuit 800 of Figure 8A conducting the current ***Ib*₃.**

In operation, when voltage ***Vl*¹** is activated, for example by setting it to Vdd, and the voltage ***Vl*²** is deactivated, for example by setting it the ground voltage, each of the sub-circuit 810_k, **1 ≤ *k* ≤ 3** is configured to have an output voltage ***Vcₖ*** encoding ${y}_{1}^{k} = {v}_{1}^{k} \left({h}_{1}^{k}\times {x}_{1}+{h}_{2}^{k}\times {x}_{2}\right)$*.* When voltage ***Vl*²** is activated, for example by setting it to Vdd, and the voltage ***Vl*¹** is deactivated, for example by setting it the ground voltage, each of the sub-circuit 810_k, **1 ≤ *k* ≤ 3** is configured to have an output voltage ***Vcₖ*** encoding ${y}_{2}^{k} = {v}_{2}^{k} \left({h}_{1}^{k}\times {x}_{1}+{h}_{2}^{k}\times {x}_{2}\right)$ .

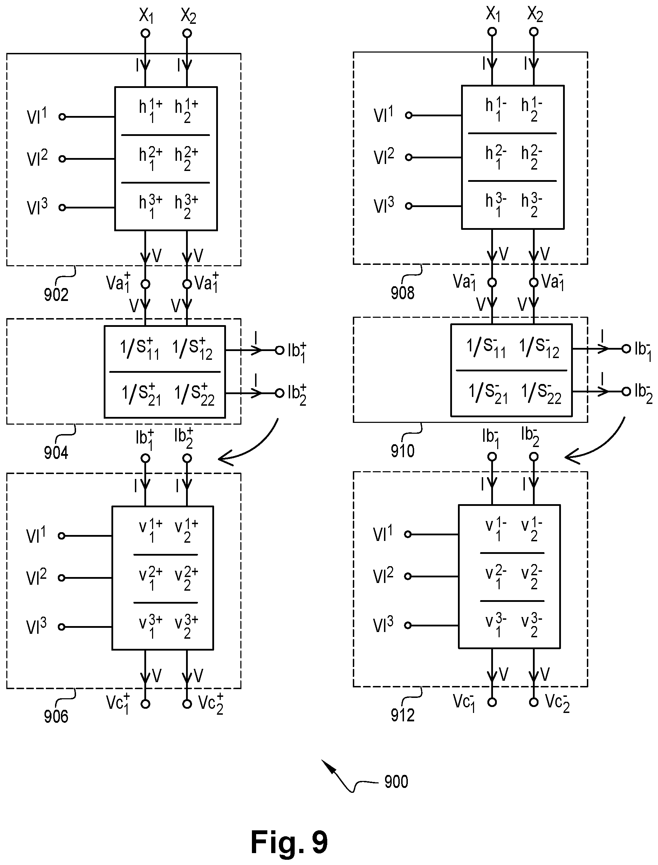

Figure 9 is another schematic representation 900 of an analog circuit configured to perform 2 element wise multiplications before and after and accumulation operations according to an example embodiment of the present disclosure. In particular, the circuit 900 is an alternative to architecture 300 of Figure 3 that is capable of implementing MAC operations when one or more parameters, for example one or more of the coefficients of the vertical or horizontal vectors or of the shared matrix, is negative or equal to zero.

The circuit 900 for example comprises a sequence of circuit blocks 902, 904 and 906 and another sequence of circuit blocks 908, 910 and 912. The sequences 902, 904 and 906 and 908, 910 and 912 are each configured to perform the MAC operation as described in relation with Figure 3. For example, each coefficient of the vertical and horizontal vectors and each coefficient of the shared matrix is decomposed into a positive part and a negative part. For example, each coefficient ${h}_{i}^{k}$, for **1 ≤ i ≤ 2** and **1 ≤ *k* ≤ 3,** is such that ${h}_{i}^{k} = {h}_{i}^{k , +} - {h}_{i}^{k , -}$*,* where ${h}_{i}^{k , +}$ and ${h}_{i}^{k , -}$ are positive values. Similarly, each coefficient ${v}_{j}^{k}$, for **1 ≤ j ≤ 2** and **1 ≤ *k* ≤ 3,** is such that ${v}_{j}^{k} = {v}_{j}^{k , +} - {v}_{j}^{k , -}$, where ${v}_{j}^{k , +}$ and ${v}_{j}^{k , -}$ are positive values. Similarly again, each coefficient *s*_{*i*,*j*} of the matrix S is such that $1 / {s}_{i , j} = 1 / {s}_{i , j}^{+} - 1 / {s}_{i , j}^{-}$*,* where ${s}_{i , j}^{+}$ and ${s}_{i , j}^{-}$ are positive values.

The circuit blocks 902 and 908 are respectively configured to generate voltage values ***Va*1⁺, *Va*2⁺** and ***Va*1⁻, *Va*2⁻.** The voltage values ***Va*1⁺** and ***Va*2⁺** are provided to the circuit block 904 and the voltages values ***Va*1⁻** and ***Va*2⁻** are provided to the circuit block 910.

The circuit blocks 904 and 910 are respectively configured to generate currents ***Ib*1⁺, *Ib*2⁺** and ***Ib*1⁻** and ***Ib*2⁻.** The currents ***Ib*1⁺** and ***Ib*2⁺** are supplied to the circuit block 906 and the currents ***Ib*1⁻** and ***Ib*2⁻** are supplied to the circuit block 912.

The circuit blocks 906 and 912 are respectively configured to generate voltage values ***Vc*1⁺, *Vc*2⁺** and ***Vc*1⁻, *Vc*2⁻** such that ***Vc*1 = *Vc*1⁺ - *Vc*1⁻** and ***Vc2* = *Vc*2⁺ - *Vc*2⁻.**

The subtraction executed to obtain the voltages ***Vc*1** and ***Vc2*** is for example performed in the digital domain after conversion of the analog signals ***Vc*1⁺, *Vc*1⁻, *Vc*2⁺** and ***Vc*2⁻** into digital signals, for example by an analog to digital converter. In another example, the subtraction is performed using a current subtractor circuit. Current subtractor circuits are known by the person skilled in the art and for example comprise two current mirrors.

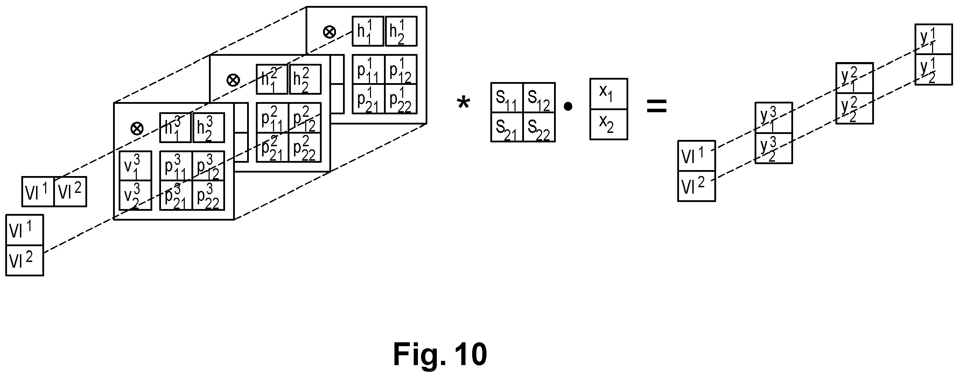

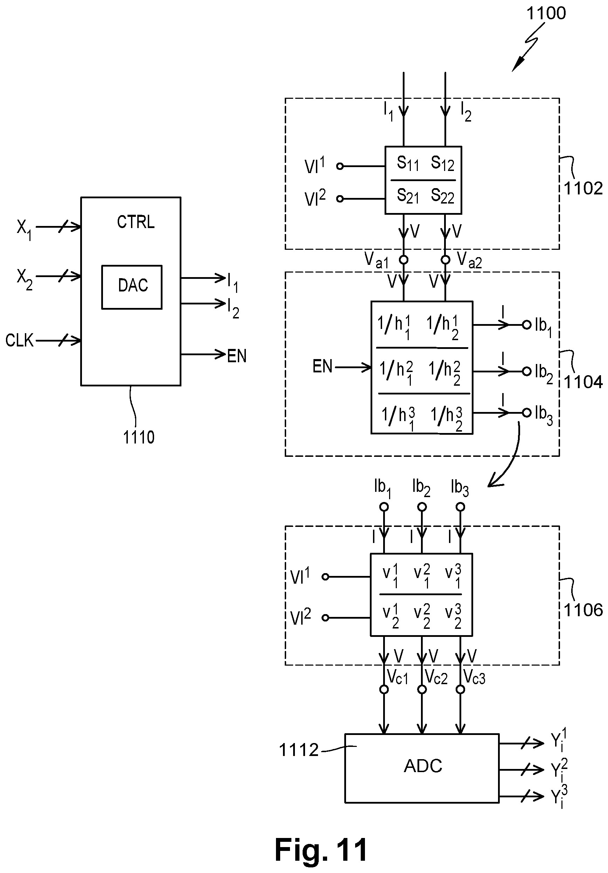

Embodiments have been described in which output components of a selected model are computed in parallel. By changing the computation order and transposing the array, it is possible to parallelize the computation of a single output component for all models, as will now be described in more detail with reference to Figures 10 and 11.

Figure 10 illustrates example of prediction calculations for a parallelized computation of a same output component for a plurality of models, and for example for all K supported models. For example, a selector line **(*Vl*¹, *Vl*²)** allows one output component to be selected such that the selected output component is computed for all models in a parallel fashion.

For example, as represented in Figure 10, the output components ${y}_{1}^{1} , {y}_{1}^{2}$ and ${y}_{1}^{3}$, corresponding to the output component ***y*₁** for each of the three models, are for example computed in parallel by activating the selector line ***Vl*¹.** The output components ${y}_{2}^{1} , {y}_{2}^{2}$, and ${y}_{2}^{3}$, corresponding to the output component ***y*₂** for each of the three models, are for example computed in parallel by activating the selector line ***Vl*².**

Figure 11 is another schematic representation of an analog circuit 1100 configured to perform multiply and accumulation operations. In particular, the representation 1100 illustrates an example implementation the computation in parallel of one output component for all models as described in relation with Figure 10.

The representation 1100 comprises circuit blocks 1102, 1104 and 1106. The circuit blocks 1102 and 1106 are, for example, multiplier circuits configured to output voltage values based on input currents. The circuit block 1104 is for example a crossbar array configured to output currents based on voltage inputs.

The circuit block 1102 is for example configured to received, via two input lines, currents ***I*₁** and ***I*₂** respectively encoding the input data values ***x*₁** and ***x*₂.** The currents ***I*₁** and ***I*₂** are for example supplied by the control circuit 1110. In particular, the control circuit 1110 for example receives the input data values ***x*₁** and ***x*₂,** for example as digital signals, and generates the currents ***I*₁** and ***I*₂** based on the input data values ***x*₁** and ***x*₂,** for example using a digital to analog converter (DAC). The control circuit 1110 also for example receives a clock signal CLK.

The circuit blocks 1102 and 1106 are for example configured to receive the selector line control signals **(*Vl*¹, *Vl*²)** generated by the control circuit and used to select the output component to be generated. For example, the signals ***Vl*¹** and ***Vl*²** are two voltages, one being set to Vdd and the other to the ground. Moreover, the configuration of the selector line is set for a round of operations performed by the sequence of circuit blocks 1102, 1104 and 1106. In other word, to compute in parallel for each model one output component, the configuration of the selector line does not change until the end of the operation performed by the blocks 1102, 1104 and 1106. The configuration changes when another component of the output is to be computed.

The circuit block 1102 is configured to generated output voltages ***Va*₁** and ***Va*₂** based on the selector line control signals. In particular, the circuit block 1102 is configured to receive the two voltages ***Vl*¹** and ***Vl*²,** one of which is deactivated for example by being set to the ground voltage and the other of which is activated, for example by being set to the supply voltage Vdd.

The circuit block 1102 further comprises resistive element (not illustrated in Figure 11) encoding the coefficients of the shared matrix S. Moreover, when ***Vl*¹** is activated and ***Vl*²** is deactivated, the circuit block 1102 is configured to generate the voltage ***Va*₁** encoding the value ***s*_{1,1} × *x*₁** and to generate the voltage ***Va*₂** encoding the value ***s*_{1,2} × *x*₂**. When ***Vl*¹** is deactivated and ***Vl*²** is activated, the circuit block 1102 is configured to generate the voltage ***Va*₁** encoding the value ***s*_{2,1} × *x*₁** and to generate the voltage ***Va*₂** encoding the value ***s*_{2,2} × *x*₂.**

For example, the circuit block 1102 is a multiplier circuit having a similar architecture to the multiplier circuit 400. In particular, the person skilled in the art will understand how to adapt the circuit 400 to perform the multiplication performed by the circuit block 1102.

The circuit block 1104 for example receives an enable signal EN from the control circuit 1110 and is configured to perform MAC operations based on the horizontal vectors ***VH^{k},* 1 ≤ *k* ≤ 3.** The circuit block 1104 receives as inputs the voltages ***Va*₁** and ***Va₂,*** from the circuit block 1102. The circuit block 1104 for example comprises resistive elements (not illustrated in Figure 11) encoding the coefficients $1 / {h}_{i}^{k}$**, 1 ≤ *i* ≤ 2** and **1 ≤ *k* ≤ 3.** The circuit block 1104 is for example configured to output currents Ib1, Ib2 and Ib3. For example, when ***Vl*¹** is activated and ***Vl*²** is deactivated, the currents ***Ib*₁, *Ib*₂** and ***Ib*₃** respectively encoding the values ${h}_{1}^{1} \times {s}_{1 , 1} \times {x}_{1} + {h}_{2}^{1} \times {s}_{1 , 2} \times {x}_{2} , {h}_{1}^{2} \times {s}_{1 , 1} \times {x}_{1} + {h}_{2}^{2} \times {s}_{1 , 2} \times {x}_{2}$ and ${h}_{1}^{3} \times {s}_{1 , 1} \times {x}_{1} + {h}_{2}^{3} \times {s}_{1 , 2} \times {x}_{2}$. Moreover, when ***Vl*¹** is deactivated and ***Vl*²** is activated, the currents ***Ib*₁, *Ib*₂** and ***Ib*₃** respectively encodes the values ${h}_{1}^{1} \times {s}_{2 , 1} \times {x}_{1} + {h}_{2}^{1} \times {s}_{2 , 2} \times {x}_{2} , {h}_{1}^{2} \times {s}_{2 , 1} \times {x}_{1} + {h}_{2}^{2} \times {s}_{2 , 2} \times {x}_{2}$ and ${h}_{1}^{3} \times {s}_{2 , 1} \times {x}_{1} + {h}_{2}^{3} \times {s}_{2 , 2} \times {x}_{2}$ *.* This selection is based on the voltages ***Va*₁** and ***Va*₂** provided by the circuit block 1102, and therefore the circuit block 1104 does not for example receive the voltages ***Vl*¹** and ***Vl*².**

For example, the circuit block 1104 is a crossbar array circuit having an architecture similar to the crossbar array circuit 500. The person skilled in the art will understand how to adapt the circuit 500 to perform the MAC operations performed by the circuit block 1104.

The circuit block 1106 is for example configured to receive the currents values ***Ib*₁, *Ib*₂** and ***Ib*₃,** from the circuit block 1104 and to generate voltages ***Vc*₁, *Vc*₂** and ***Vc*₃** based on the signal ***Vl*** that is activated. In particular, depending on which selector line ***Vl*** is activated, the three voltages ***Vc*₁, *Vc*₂** and ***Vc*₃** correspond to either to the first output components for the three models or to the second output components for the three models. The circuit block 1106 for example comprises resistive elements (not illustrated in Figure 11) encoding the coefficient ${v}_{j}^{k}$*,* **1 ≤ *j* ≤ 2** and **1 ≤ *k* ≤ 3.** The circuit block 1106 is for example configured, when ***Vl*¹** is activated and ***Vl*²** deactivated, to perform, in parallel for each **1 ≤ *k* ≤ 3,** the multiplication between ***Ibₖ*** and ${v}_{1}^{k}$. The circuit block 1106 is also for example configured, when ***Vl*¹** is activated and ***Vl*²** is deactivated, to perform, in parallel for each **1 ≤ *k* ≤ 3,** the multiplication between ***Ibₖ*** and ${v}_{2}^{k}$.

According to the configuration of the selector line signals ***Vl*¹** and ***Vl*²,** the sequence of circuit blocks 1102, 1104 and 1106 is configured to generate output voltage encoding the output values ${y}_{i}^{k}$, 1 ≤ *k* ≤ 3. For example, the circuit block 1106 is coupled to an analog to digital converter 1112 (ADC) configured to convert the output voltages *Vc*₁ and *Vc*₂ into the voltage values ${y}_{i}^{1} , {y}_{i}^{2}$ and ${y}_{i}^{3}$ in the digital domain.

For example, the circuit block 1106 is a vector multiplier circuit having a similar architecture to the vector multiplier circuit 400 of Figures 4A and 4B. In particular, the person skilled in the art will understand to adapt the circuit 400 to perform the multiplication performed by the circuit block 1106.

In the general case of a number *K* of models and where the input data is of size *n,* the circuit block 1102 is for example implemented by a multiplier circuit comprising a number *n* of sub-circuits, each of the sub-circuits comprising a number *n* of conductive lines comprising a resistive element, each *i*-th conductive line of the sub-circuits being supplied by an i-th voltage source, the *i*-th conductive line of the *j-*th sub-circuit being configured to perform the multiplication between the coefficient on the *i*-th row and *j*-th column of the shared matrix with the *j*-th component of the input data. Furthermore, the circuit block 1104 is for example implemented by a crossbar array circuit comprising a number *K* of conductive lines, each coupled to a number *n* of resistive elements. The circuit block 1106 is for example implemented by another vector multiplier circuit, for example comprising a number *K* of sub-circuits, each of the sub-circuit comprising a number *n* of conductive lines comprising a resistive element, each i-th conductive line of the sub-circuits being supplied by the i-th voltage source, the i-th conductive line of the k-th sub-circuit being configured to perform the multiplication between the i-th component of the k-th vertical vector with a value encoded by the current on the k-th conductive line of the crossbar circuit.

In operation, during inference based on given input data values *x*₁ and *x*₂, the circuit 1100 of Figure 11 is operated over a number of cycles equal to the number of output components to be generated, which may be one or more. During each cycle, the control voltages *Vl*¹, *Vl*² and input data values *x*₁ and *x*₂ are for example maintained constant for a settling time period to allow the output values ${y}_{i}^{1} , {y}_{i}^{2}$ and ${y}_{i}^{3}$ to settle at their final levels before the start of the subsequent cycle.

An advantage of the embodiment of Figures 10 and 11 is that it permits the calculation of one output component of all of the models, for example in order to determine the prediction and the uncertainty outputted by one neuron of a neural network. For example, this can be useful for applications such as for the detection of an object in an image.

The examples of circuits 300, 900 and 1100 are further able to implement multi-layer variants. In these variants, the output voltages are converted into currents, for example by applying the voltage across a resistor or a Memristor, and by copying these currents as inputs to the next layers.

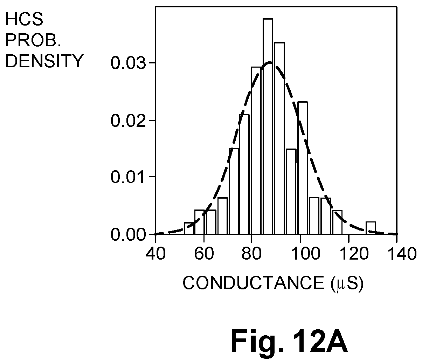

Figure 12A is a graph illustrating an example of probabilities (HCS PROB. DENSITY) of conductance levels (CONDUCTANCE) in *µ*S of an OxRAM resistive memory element. In particular, Figure 12A illustrates cycle-to-cycle variation in the conductance for a single SET programming current. In a deterministic neural network, the conductance variations represented by Figure 12A can be a drawback. However, in a Bayesian inference using Monte Carlo Markov Chain (MCMC) or Variational Inference, such a randomness in the conductance of the device can be exploited. For example, exploiting the randomness of the conductance of an OxRAM device based on Metropolis-Hastings MCMC is described in more detail in the publication by T.Dalgaty et al. entitled "In-situ learning using intrinsic memristor variability via Markov chain Monte Carlo sampling." Nature Electronics 4.2 (2021): 151-161.

For example, an embodiment of the present disclosure involves using machine learning based on MCMC to determine the model parameters, and in particular the values of, for example, the elements of the shared matrix *S*, and of the horizontal and vertical vectors *H^{k}, V^{k}.*

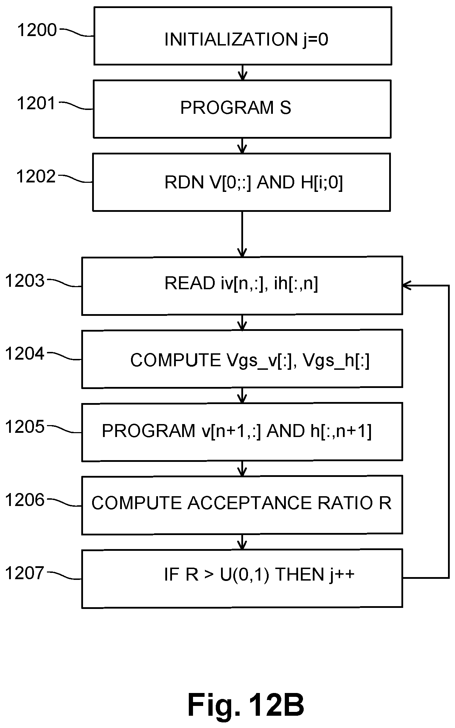

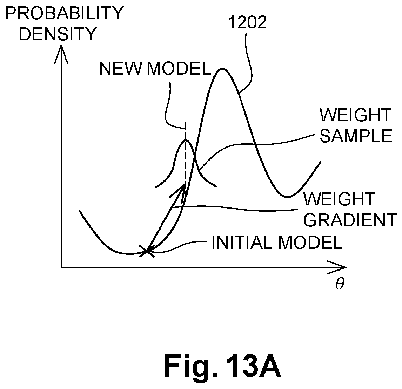

Figure 12B is a flow diagram illustrating a method of training of an analog multiplier circuit, such as the circuit 300 of Figure 3, the circuit 900 of Figure 9 or the circuit 1100 of Figure 11, according to an embodiment of the present disclosure. In particular, Figure 12B illustrates a training method for example using an MCMC method, described in relation with Figure 12A, when the analog circuit, and in particular the resistive elements, are implemented using OxRAM devices. In particular, the method described in relation with Figure 13a is an example of on-chip implementation of the Metropolis-Hastings algorithm using OxRAM devices.

In this example, the shared matrix S is already determined. For example, the shared matrix S has been learnt using a transfer learning protocol. Only the K horizontal vectors and the K vertical vectors are learnt using the method described in relation with Figure 12A. The set of the K vertical vectors is then denoted as being a matrix V of size *n* × *K*, where each column of the matrix V designates a vertical vector. In other words, for each 0 ≤ *k* ≤ *K* - 1, V[:;k-1] represents the vertical vector *V^{k}.* Similarly, the set of the K horizontal vectors is then denoted as being a matrix H of size *K × n,* where each row of the matrix H designates a horizontal vector. In other words, for each 0 *≤ k* ≤ *K* - 1, H[k-1;:] represents the vertical vector *H^{k}.*

The method steps of Figure 12B are for example implemented by the control circuit 310 of the analog circuit 300 of Figure 3, or by a similar circuit of the analog circuits of Figures 9 or 11.

For example, in a step 1200 (INITIALIZATION j=0), an index value j is set to an initial value, for example 0.

In a step 1201 (PROGRAM S), the shared matrix S is for exampled programed in the analog circuit.

In a step 1202 (RDN V[0;:] AND H[:,0]), the resistive elements corresponding to the first row of the matrix V and to the first column of the matrix H are programmed, for example with random values. The programmed currents for example follow a Gaussian distribution, the mean of which is determined by the programming current.

In a step 1203 (READ iv[j;:] AND ih[:;j]), the currents passing through the resistive elements corresponding to jth row of the matrix V and to the jth column of the matrix H are for example read.

In a step 1204 (COMPUTE Vgs_v[:] AND VGS_h[:]), a programing parameter is for example computed for the jth row, and respectively for the jth column, of the matrices V and H. For example, the programing parameter is the drain to source voltage (Vgs).

In a step 1205 (PROGRAM V[j+1;:] AND H[:,j+1]), the programing parameter computed in step 1204 is for example used to program the resistive elements corresponding to the j+1-th row of matrix V and to the j+1-th column of matrix H. For example, the programing parameter is used in such a way that the resistive elements corresponding to the j+1-th row of matrix V and of the j+1-th column of matrix V are respectively distributed following Gaussian distribution centered around the values V[j,:] and H[:;j].

In a step 1206 (COMPUTE ACCEPTANCE RATIO R), a forward propagation is for example performed on V[j+1,: ] and H[:, j+1]. An acceptance ratio value is for example computed, for example using a ratio of log-likelihoods and log-prior. A method for forward propagation is for example described in more detail in the publication by T.Dalgaty et al. entitled *"In-situ learning using intrinsic memristor variability via Markov chain Monte Carlo sampling."* Nature Electronics 4.2 (2021): 151-161.

In a step 1207 (IF R>U(0,1) THEN j++), the acceptance ratio value is the for example compared to a random value, for example sampled from a uniform distribution U(0,1). If the acceptance ratio value is higher than the random value, the index value is incremented to j+1 and the process for example resumes at step 1203. In the case where the acceptance ratio value is smaller than the random sample, then the index remains the same and the process for example resumes at step 1205. The process for example ends at step 1207 when the index value is equal to n-1.

Figure 13A is a graph illustrating an example of the SGLD (Stochastic Gradient Langevin Dynamics) algorithm, which involves random sampling. In particular, this algorithm is a type of Markov chain Monte Carlo (MCMC) sampling approach widely applied in machine learning. It is a probabilistic alternative to approaches involving the fully gradient-based learning of maximum likelihood models.

According to gradient-based learning, the algorithm is based on a loss function, and the aim is to determine an optimal model that minimizes the loss. A major drawback of loss-based approaches is that, in the case of low-precision model parameters or parameter updates, the algorithm may not converge towards the optimal model. This is often the case when learning using a resistive memory-based model.

In contrast, according to MCMC learning, the aim is to estimate the probability density of a posterior distribution. In particular, as represented by Figure 13A, MCMC learning is based on determining an approximation of the posterior distribution 1202 of the probability density (PROBABILITY DENSITY) of the model *θ*. To do this, from an initial model (INITIAL MODEL), a chain of random samples is generated using localized random jumps and guided by the Langevin gradient. Figure 13A illustrates an example of a first random sampling operation in which a calculated weight gradient (WEIGHT GRADIENT) is added to the initial model, and the weight sample (WEIGHT SAMPLE) corresponds to a random sampling around the new model (NEW MODEL). This process is repeated, for example based on an update equation of the SGLD algorithm, until a posterior approximation of the posterior distribution 1202 has been generated. In some cases, the approximation is further aided by rejection steps according to the Metropolis-adjusted Langevin algorithm (MALA).

An advantage of the approach represented by Figure 13A is that the resulting posterior approximation can be used to make accurate predictions, in particular with a small amount of noisy training data, in addition to providing wellcalibrated uncertainty estimates related to those predictions.

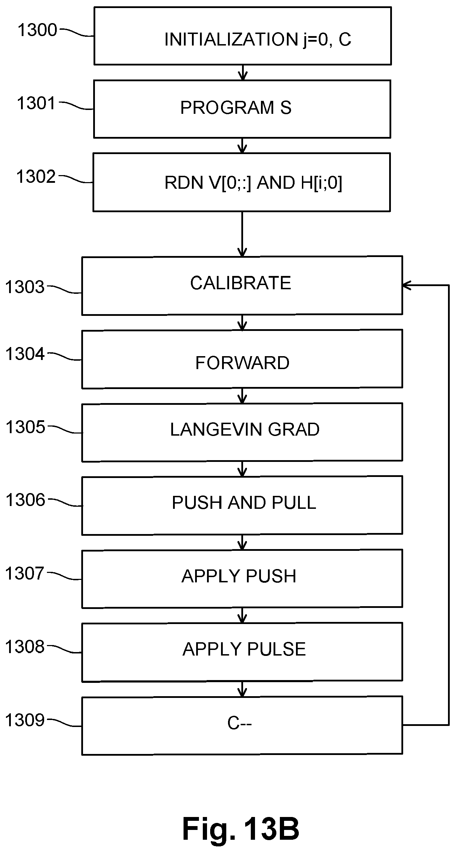

Figure 13B is a flow diagram illustrating a method of training an analog circuit, such as the circuit 300 of Figure 3, the circuit 900 of Figure 9 or the circuit 1100 of Figure 11, according to another embodiment of the present disclosure. In particular, Figure 13B illustrates a training method for example using a Langevin Gradient method, described in relation with Figure 13A, when the analog circuit, and in particular the resistive elements, are implemented using a magnetic domain-wall device. Magnetic domain-wall devices are for example described in more detail in the publications: Kumar, Durgesh, et al. "Domain wall memory: Physics, materials, and devices." Physics Reports 958 (2022): 1-35; and Sbiaa, R., and S. N. Piramanayagam. "Multi-level domain wall memory in constricted magnetic nanowires." Applied Physics A 114 (2014): 1347-1351. The method described in relation with Figure 13B is an example of an on-chip implementation of Stochastic Gradient Langevin Dynamics on a magnetic domain-wall device.

In a step 1300 (INITIALIZATION j=0, C) an index value j is set to an initial value, for example 0 and a count value down-cnt is set to a value C.

In a step 1301 (PROGRAM S), the shared matrix S is programmed in the analog circuit. For example, as for the method described in relation with Figure 12B, the shared matrix S has been learnt, for example using a transfer learning protocol.

A step 1302 (RDN V[0;:] AND H[:,0]) is similar to step 1202. The resistive elements corresponding to the first row of the matrix V and to the first column of the matrix H are programmed, for example with randomly generated values. The values of conductance of the resistive elements are for example programmed by applying pulses of random pulse-widths to the resistive elements.

In a step 1303 (CALIBRATE), the count value is for example compared to a minimum value, for example 0. If the count value is equal to the minimum value, then a calibration is performed. The calibration for example involves programming the j+1-th row of matrix V and the j+1-th column of matrix H to match the j+1-th row of matrix V and the j+1-th column of matrix H down to a minimum tolerated error.

In a step 1304 (FORWARD), data is applied to the circuit 1100, for example in the form of input currents corresponding to input data. The j-th vectors of matrices V and H are selected by generating a voltage output in the final circuit block. These output voltages correspond to output predictions of a single layer or, if multiple layers are chained together, the output of a network. These outputs are, for example, compared with target values and a Langevin gradient is calculated.

In a step 1305 (LANGEVIN GRAD), the Langevin Gradient associated to the j-th row of matrix V and the j-th column of matrix H is for example computed. The implementation of this step is for example described in the publication by T.Dalgaty et al. entitled "Scaling-up Memristor Monte Carlo with magnetic domain-wall physics." Machine Learning with New Compute Paradigms. 2023*.*

The conductance values of the j-th row of matrix V and the j-th column of matrix H are updated using each Langevin gradient calculated in step 1305. The conductance values are further updated, for example based on an additional noise term. This update for example comprises calculating, in a step 1306 (PUSH AND PULL), two pulse widths for each j-th row of matrix V and j-th column of matrix H are calculated. For example, first pulses Tvpush and Thpush move or "push" the domain wall in a first direction. Second pulses Tvpull and Thpull move or "pull" the domain wall in the opposite direction.

In a step 1306 (APPLY PUSH) pulses of pulse-widths Tvpush and Thpush are respectively applied to the j-th row of matrix V and the j-th column of matrix H.

In a step 1307 (APPLY PULL) pulses of pulse-widths Tvpull and Thpull are respectively applied to the j-th row of matrix V and the j-th column of matrix H.

In a step 1309 (C--), the count value is decremented and the process resumes at step 1303. In the case where the count value is equal to 0, then a new loop starts in a new realization of step 1300, wherein the index value j is incremented and the count value is reinitialized to its original value.

In other examples, the shared matrix S is learnt at the same time as the vertical vectors *V^{k}* and the horizontal vector *H^{k}*.

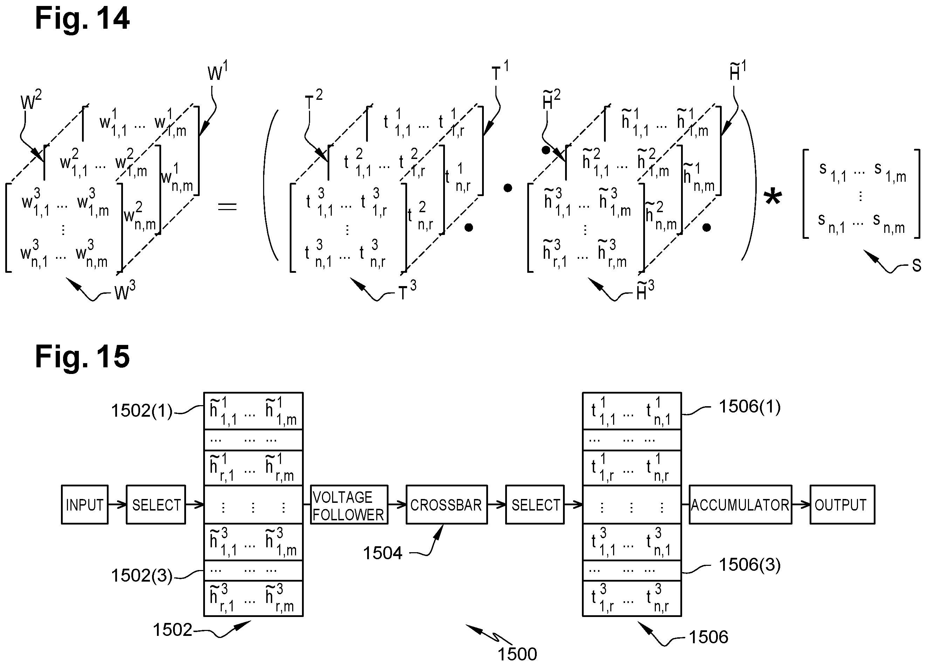

Figure 14 illustrates a prediction calculation based on a low rank approximation, as an alternative to the prediction calculation of Figures 2A and 2B.

In this example, instead of describing each matrix *W^{k}* being such that *W^{k} =* (*H^{k}* ⊗ *V^{k}*) ** S,* with *H^{k}* and *V^{k}* being horizontal and vertical vectors, each matrix *W^{k} ,* is approximated by *W^{k}* = (*T^{k}• H̃^{k}*)**S,* where ${T}^{k} = {\left({t}_{i , j}^{k}\right)}_{1 \leq i \leq n , 1 \leq j \leq r}$ is a matrix of size *n* × *r*, ${{H}^{˜}}^{k} = {\left({{h}^{˜}}_{i , j}^{k}\right)}_{1 \leq i \leq r , 1 \leq j \leq m}$ is a matrix of size *r* ×*m* and S is the shared matrix of size *n*×*m,* and where the operator • represents the matrix multiplication operator. For example, r is an integer between 2 and m. Then, the output vector *y^{k}* is such that: ${\sum }_{l = 1}^{r} \left[\left(x∗{{H}^{˜}}^{k}\left[l,:\right]\right)\cdot S\right] ∗ {T}^{k} \left[:,l\right] ,$ where *H̃^{k}*[*l,*:] and T*^{k}*[:,*l*] respectively refer to the l-th row of matrix *H̃^{k}* and to the l-th column of matrix *T^{k}.*

Figure 15 is a schematic representation of an analog circuit 1500 configured to perform 2 element wise multiplications before and after multiply and accumulation operations according to an embodiment of the present disclosure.

The input vector x (INPUT) is supplied to a multiplier 1502. In this example, the multiplier 1502 comprises three segments, each corresponding to a matrix *H̃^{k}, k* ∈ {1,2,3}**.** Generally, the multiplier 1502 comprises as many segments as models. Each segment of the multiplier 1502 comprises r rows and m columns of memristors. For example, the memristor on the first segment, i-th row and j-th column of multiplier 1502 has, as its resistance, a value encoding the value of the element ${{H}^{˜}}_{i , j}^{k}$, 1 ≤ *i* ≤ and 1≤ *j ≤* m.

A selector (SELECT) allows the supplying of the input vector to a row of a particular segment of the multiplier 1502. For example, the selection towards one particular model is the same as the one described in relation with Figure 3.

The input data x is represented as a vector of currents that is applied to a vector of memristors corresponding to a i-th row of the matrix *H̃^{k}*. The voltage drops across the memristors provide an intermediate vector ${a}_{i}^{k}$ equal to *x** *H^{k}*[*i*,:]. This multiplication is achieved between currents and resistances.

The voltages at the output of the multiplier 1502 are supplied to a crossbar circuit 1504 (CROSSBAR), for example via a voltage follower (VOLTAGE FOLLOWER). The crossbar circuit 1504 is configured to implement the multiplication with the shared matrix S. For example, the crossbar circuit 1504 is similar to the crossbar circuit 500 described above. In particular, the memristors of the crossbar circuit 1504 are programmed with the inverse values of the shared matrix S, that is to say with the values 1/*s_{i,j}*.

By applying the voltages ${a}_{i}^{k}$ over the columns of the crossbar circuit 1504, the current outputs of the rows of the crossbar circuit 1504 correspond to a value ${b}_{i}^{k}$ equal to $\hat{S} \cdot {a}_{i}^{k}$, where each element *Ŝ_{i,j}* of the matrix *Ŝ* is equal to 1/*s_{i,j}.*

Current values at the output of crossbar circuit 1504 are for example supplied to a multiplier circuit 1506. The multiplier 1506 is for example similar to the multiplier 1502 expected that it encodes the matrices *T^{k}.* In this example, the multiplier 1506 comprises three segments, each segment corresponding to the transpose of a matrix *T^{k}, k* ∈ {1,2,3}. Generally, the multiplier 1506 comprises as many segments as models. For example, the element on the first segment, i-th row and j-th column of multiplier 1506 encodes the value of the element ${T}_{j , i}^{k}$, 1 ≤ *i* ≤ *n* and 1*≤ j ≤ r.*

Like in the case of the supply of the input vector to the multiplier 1502, the outputs of the crossbar circuit 1504 are supplied to the multiplier circuit 1506 based on a selection (SELECT) of one row of one particular segment.

The current vector ${b}_{i}^{k}$ is injected into memristors of multiplier 1506, resulting in a desired output voltage drop ${y}_{i}^{k} = {b}_{i}^{k} ∗ {T}^{k} \left[:,i\right]$.

The output voltage of the multiplier 1506 is, for example, supplied as an input to an accumulator (ACCUMULATOR). In order to obtain the final prediction of *y^{k},* the input x is further supplied to the multiplier 1502 with the selection of a next row of multiplier 1502 and 1506. The output is accumulated to finally correspond to ${y}^{k} = {\sum }_{l = 1}^{r} {y}_{l}^{k}$.

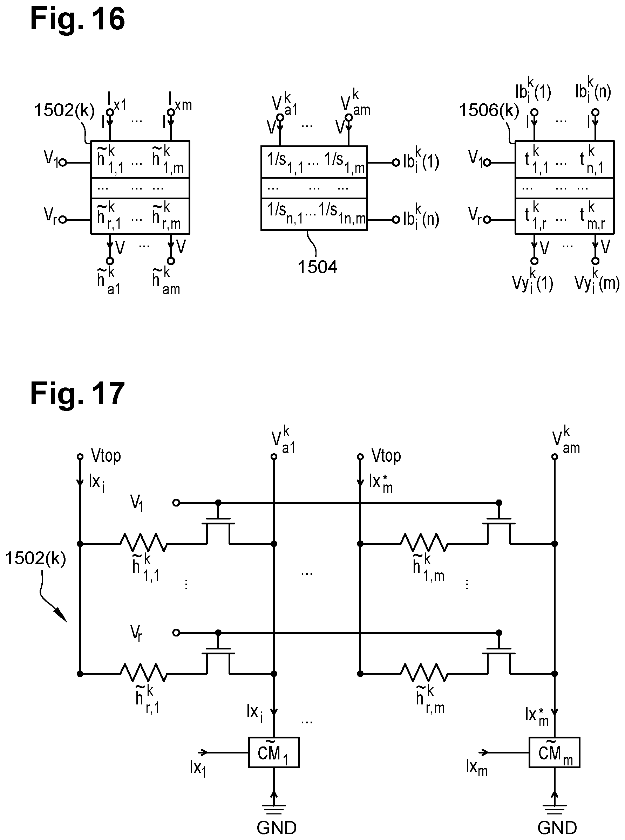

Figure 16 is another schematic representation of the analog circuit 1500 configured to perform multiply and accumulation operations according to an embodiment of the present disclosure. In particular only one segment 1502(k) and 1506(k) of each of the multipliers 1502 and 1506 is illustrated. For example, the segment corresponding to a particular model k is illustrated.

The analog circuit 1500 comprises voltage selector lines (*V*₁, ... *Vᵣ*), which are the same throughout all the models of circuit 1500. Only one line of multipliers 1502 and 1506 are activated at a time.

For a selected line i, 1 ≤ *i* ≤ *r,* the multiplier circuit 1502(k) receives, by activating selector line *Vᵢ*, the input data as m currents *Ix*₁ to *Ixₘ,* and produces m voltages ${Va}_{i}^{k} \left(l\right)$, 1 ≤ *l* ≤ *m* as outputs. These voltages are chained to the crossbar circuit 1504 as inputs, which in turn produces n currents ${Ib}_{i}^{k} \left(1\right)$ to ${Ib}_{i}^{k} \left(n\right)$ as output. These currents are injected as inputs to the multiplier circuit 1506, which produces the final result as voltages *Vy.*

Between multiplier 1502 and crossbar circuit 1504, a voltage follower is used as a transition block. Moreover, between crossbar circuit 1504 and multiplier 1506, a buffer is used as a transition block to regulate the voltage and copy the current. Finally, outputs ${Vy}_{i}^{k} \left(1\right)$ to ${Vy}_{i}^{k} \left(n\right)$ from multiplier 1506 are supplied to n accumulators, which are configured to perform the sum across the rank dimension, that is to say from i=1 to r. After every r iteration, the accumulator output is stored as the result vector for the selected ensemble k. The accumulator is then, for example, reset and the selector signals are changed to select the next ensemble member.

Figure 17 schematically illustrates the segment matrix multiplier circuit 1502(k) according to an embodiment of the present disclosure.

Each segment multiplier circuit 1502(k) has a structure comparable to the one of multiplier circuit 400 or 400', except that instead of representing a vector, it represents a matrix of size *r* × *m*. Each line of the multiplier 1502(k) is configured to be activated by the given selection line *Vₗ*, 1 ≤ *l* ≤ *r*. For example, the line ${V}_{i}^{k}$ is activated.

Each row of resistor values within the multiplier 1502(k) represent a row vector of matrix *H^{k}.* The size of each vector in the row is the layer input dimension, m. Selector transistors in row l, 1 ≤ *l* ≤ *r* are opened by setting high the voltage on the selector line *Vₗ*.

When a row is selected for reading, the m input currents *Ix*₁ to *Ixₘ* are injected via m NMOS current mirrors ${{CM}^{˜}}_{1}$ to ${{CM}^{˜}}_{m}$ located at the bottom of the m columns of the memristor array forming the circuit 1502(k). For each column j, a mirrored current ${Ix}_{j}^{∗}$, flows through each of the programmed resistances ${{h}^{˜}}_{l , j}^{k}$, 1 ≤ *l* ≤ *m*, incurring a voltage drop over each of the memristors. The voltages measured at the source of the transistors are then equal to, or close to, the value ${Va}_{l}^{k} = Vtop - {Ix}_{l}^{∗} ∗ {{h}^{˜}}_{l , j}^{k}$

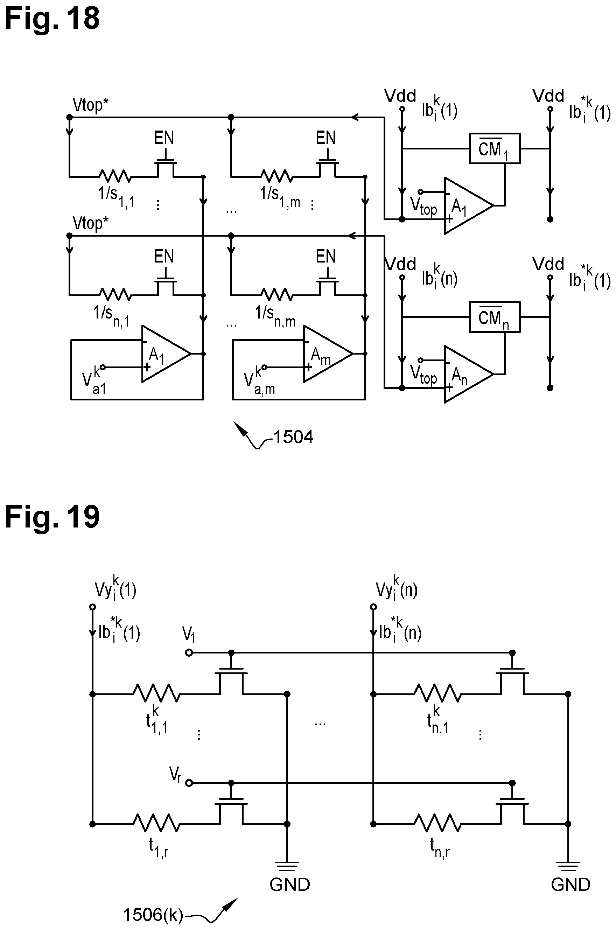

Figure 18 schematically illustrates the crossbar array circuit 1504 according to an embodiment of the present disclosure. The architecture of the crossbar circuit 1504 is for example similar to the crossbar circuit 500. In particular, the crossbar circuit 1504 comprise a memristor array encoding the matrix *Ŝ*.

The voltages at the output of the multiplier circuit 1502(k) are buffered at the base of each of the m columns of the crossbar circuit 1504, for example, via m operational amplifiers *A*₁ to *Aₘ.* The reference voltage *Vₜₒₚ* is, for example, imposed at the end of the n rows of the crossbar circuit 1504, for example using n operational amplifiers *A̅*₁ to *A̅ₙ*. The resulting voltage differences over each device in the crossbar circuit 1504 cause a current Ib to flow in each row of the crossbar circuit 1504. These currents are then copied using n current mirrors *C̅M̅1* to *C̅M̅n,* resulting in the output currents ${Ib}_{1}^{∗ k}$ to ${Ib}_{n}^{∗ k}$.

Figure 19 illustrates the segment multiplier circuit 1506(k) according to an embodiment of the present disclosure.

The rows of segment multiplier circuit 1506(k) are selected based on the same selector lines *V*₁ to *Vᵣ* as for the segment multiplier 1502(k). Activating one selector voltage, for example the line *Vᵢ*, drives the current to the corresponding row of segment 1506(k).

The architecture of segment multiplier 1506(k) is similar to the one of segment multiplier 1502(k) except that the currents ${Ib}_{1}^{∗ k}$ to ${Ib}_{n}^{∗ k}$ are, for example, sourced from PMOS transistors at the output of crossbar circuit 1504.

The resulting vector of n voltages, ${Vy}_{i}^{k} \left(1\right)$ to ${Vy}_{i}^{k} \left(n\right)$, is output for the ensemble member at index k, and for rank index i of the low rank matrix pairs *H̃^{k}* and *T^{k}.* This final output voltage vector is sent as input to the accumulator.

After iterating through the rank, that is to say after activating the selector lines *V*₁ to *Vᵣ* one after the other, the output voltages of the accumulator encode the output vector *y^{k}*.

An advantage of the embodiments described in the present disclosure is that the execution of BatchEnsemble calculation allows to economize, by the use of the shared matrix, the memory space required. Another advantage of the embodiments described in the present disclosure is that the full hardware implementation of the MAC operations allows to accelerate the execution of the MAC operations associated with a plurality of models, and to reduce the energy consumption.

Another advantage of the embodiments described in the present disclosure is that the training of the neural network is implementable on chip, directly by the analog circuit.

Various embodiments and variants have been described. Those skilled in the art will understand that certain features of these embodiments can be combined and other variants will readily occur to those skilled in the art. For example, while embodiments have been described using NMOS or PMOS transistor, it will be apparent to those skilled in the art that the various circuits could be adapted to replace some or all of the PMOS transistors by NMOS transistors, or vice versa. Moreover, the type of transistors implemented in the crossbar array circuits and/or in the multiplier circuit can vary. For example, MOS transistors could be replaced by other types of transistors in the crossbar array circuits and/or in the multiplier circuits. For example, the multiplier circuits and the crossbar circuit are coupled to each other via only ADCs, DACs, registers, or small SRAM memories.

Finally, the practical implementation of the embodiments and variants described herein is within the capabilities of those skilled in the art based on the functional description provided hereinabove. For example, it will be apparent to those skilled in the art how to adapt implementations to different numbers of models and to different sizes of input data. In particular, the person skilled in the art will know how to adapt the described circuit to the general case of a number K of models and where the input and output data, the vertical and horizontal vectors are of size n and m and the shared matrix of size *n* × *m*.

## Claims

1. An analog vector multiplier circuit comprising a first circuit (400, 600, 810_1) for performing a first multiplication of a first or second value with a third value, the first circuit comprising:
- a first branch (402_1, 602_1, 812_11) comprising the series connection of a first programmable resistive element and a first transistor, the first programmable resistive element being programmed to have a first resistance representative of the first value ( ${h}_{1}^{1} , {v}_{1}^{1} , {s}_{1}^{1}$), and
- a second branch (402_2, 602_2, 812_12) comprising the series connection of a second programmable resistive element and a second transistor, the second programmable resistive element being programmed to have a second resistance representative of the second value ( ${h}_{1}^{2} , {v}_{1}^{2} , {s}_{1}^{2}$);
**characterised by**
- a control circuit (310, 1110) configured to control the first and second transistors to select the first or second branch; and
- a first current mirror (410, 610, 810) configured to apply a current (*I*₁, *I*₂) generated based on the third value (*x*₁*, x*₂) to the branch selected by the control circuit in order to generate, across the selected branch, a first voltage (*Vtop - Va*₁) proportional to the result of the first multiplication.

2. The analog vector multiplier circuit of claim 1, further comprising a second circuit (400', 600', 810_2) for performing, in parallel with the first multiplication, a second multiplication of a fourth or fifth value with a sixth value, the second circuit comprising:
- a third branch (402'_1, 602'_1, 812_21) comprising the series connection of a third programmable resistive element and a third transistor, the third programmable resistive element being programmed to have a third resistance representative of the fourth value ( ${h}_{2}^{1} , {v}_{2}^{1} , {s}_{2}^{1}$);
- a fourth branch (402'_2, 602'_2, 812_22) comprising the series connection of a fourth programmable resistive element and a fourth transistor, the fourth programmable resistive element being programmed to have a fourth resistance representative of the fifth value ( ${h}_{2}^{2} , {v}_{2}^{2} , {s}_{2}^{2}$), wherein the control circuit (310, 1110) is configured to control the third and fourth transistors to select the third or fourth branch;
- a second current mirror (410', 610', 810') configured to apply a current (*I*₁, *I*₂) generated based on the sixth value (*x*₂) to the branch of the second circuit selected by the control circuit in order to generate, across the selected branch, a second voltage (*Va*₂) proportional to the result of the second multiplication.

3. A neural network comprising the analog vector multiplier circuit of claim 1 or 2.

4. The neural network according to claim 3, further comprising a first crossbar array circuit (500, 800) configured to output one or more second current values (*Ib*₁, *Ib*₂, *Ib*₃) by performing one or more multiplication and/or accumulation operations based on at least the first voltage (*Va*₁).

5. The neural network according to claim 4, further comprising a further analog vector multiplier circuit (600) configured to generate one or more output voltages (*Vc*₁, *Vc*₁) by performing one or more multiplication operations based on the one or more second current values.

6. The neural network according to claim 5, further comprising:
- a first voltage replication circuit configured to replicate the first voltage (*Va*₁) generated by the first circuit and supply the replicated voltage to the crossbar circuit, the first voltage replication circuit comprising an operational amplifier.

7. The neural network of any of claims 4 to 6, wherein the third and sixth values are components of an input vector of size *n, n* being an integer, the circuit being further configured to perform a number K of sequences of multiply and accumulate operations, K being an integer representing a number of models implemented by the neural network.

8. The neural network of any of claims 4 to 7, wherein:
- the analog vector multiplier circuit comprises a number of *K* × *n* resistive elements programmed to the values of coefficients of *K* horizontal vectors of size *n*;
- the crossbar circuit comprises *n* × *n* resistive elements programmed to the inverse values of coefficient of a shared matrix (S) of size *n* × *n*.

9. The neural network of claim 5 or of any of claims 6 to 8 when dependent on claim 5, wherein:
- the further analog vector multiplier circuit comprises a number of *K* × *n* resistive elements programmed to the values of coefficients of *K* vertical vectors of size *n.*

10. The neural network of claim 5 or of any of claims 6 to 8 when dependent on claim 5, wherein:
- the analog vector multiplier circuit comprises a number of *n* × *n* resistive elements programmed to the inverse values of coefficients of a shared matrix of size *n* × *n*;
- the crossbar circuit comprises a number of *K* × *n* resistive elements programmed to the values of coefficients of *K* horizontal vectors of size n; and
- the further analog vector multiplier circuit comprises a number of *K* × *n* resistive elements programmed to the values of coefficients of *K* vertical vectors of size *n.*

11. The neural network according to claim 10 when dependent to claim 7, configured to generate, for each model k among the K models implemented by the neural network, *n* output voltages (*Vc*₁, *Vc*₂) corresponding to *n* output values ${y}_{i}^{k}$, 1 ≤ *i* ≤ *n*, verifying the following equation : ${y}_{i}^{k} = {v}_{1}^{k} \times \left({h}_{1}^{k}\times {x}_{1}\times {s}_{i , 1}+…+{h}_{n}^{k}\times {x}_{n}\times {s}_{i , n}\right) ,$ where ${v}_{j}^{k}$, 1 ≤ *j* ≤ *n,* is the value of the j-th coefficient of the k-th vertical vector, ${h}_{j}^{k}$*,* 1 ≤ *j* ≤ *n,* is the value of the j-th coefficient of the k-th horizontal vector, *s_{i,j},* is the value of the i-th row and j-th column of the shared matrix, and *xⱼ,* 1 ≤ *j* ≤ *n,* is the j-th component of the input vector.

12. The neural network of any of claims 3 to 11, wherein the neural network is configured to perform classification operations.

13. A method of performing, by a first circuit (400, 600, 810_1) of an analog vector multiplier circuit, a first multiplication of a first or second value with a third value comprising for, the method comprising:
- programming a first programmable resistive element to have a first resistance representative of the first value ( ${h}_{1}^{1} , {v}_{1}^{1} , {s}_{1}^{1}$), the first programmable resistive element being connected in series with a first transistor in a first branch (402_1, 602_1, 812_11) of the first circuit;
- programming a second programmable resistive element to have a second resistance representative of the second value ( ${h}_{1}^{2} , {v}_{1}^{2} , {s}_{1}^{2}$), the second programmable resistive element being connected in series with a second transistor in a second branch (402_2, 602_2, 812_12) of the first circuit;
- controlling, by a control circuit (310, 1110), the first and second transistors to select the first or second branch; and
- applying, by a first current mirror (410, 610, 810), a current (*I*₁, *I*₂) generated based on the third value (*x*₁, *x*₂) to the branch selected by the control circuit in order to generate, across the selected branch, a first voltage (*Va*₁) proportional to the result of the first multiplication.

14. The method according to claim 13, further comprising the conversion, by an analog to digital converter, of the first voltage (*Va*₁) into a digital value.

15. The method according to claim 13 or 14, wherein the third values is a value of an image.

16. A method of training the neural network of any of claims 13 to 15, comprising determining the first and second values using a Markov chain Monte Carlo (MCMC) learning approach.

17. The method according to claim 16, wherein the analog vector multiplier circuit comprises OxRAM devices and the Markov chain Monte Carlo (MCMC) learning approach comprises an application of a Metropolis-Hastings algorithm.

18. The method according to claim 16, wherein the analog multiplier circuit comprises magnetic domain-wall devices and the Markov chain Monte Carlo (MCMC) learning approach comprises an application of a Stochastic Gradient Langevin Dynamics algorithm.

## Patentansprüche

1. Eine analoge Vektormultiplikatorschaltung, die eine erste Schaltung (400, 600, 810_1) zum Ausführen einer ersten Multiplikation eines ersten oder zweiten Werts mit einem dritten Wert aufweist, wobei die erste Schaltung Folgendes aufweist:
- einen ersten Zweig (402_1, 602_1, 812_11), der die Reihenschaltung eines ersten programmierbaren resistiven Elements und eines ersten Transistors aufweist, wobei das erste programmierbare resistive Element programmiert wird, um einen ersten Widerstand aufzuweisen, der für den ersten Wert (h₁¹, v₁¹, s₁¹) repräsentativ ist; und
- einen zweiten Zweig (402_2, 602_2, 812_12), der die Reihenschaltung eines zweiten programmierbaren resistiven Elements und eines zweiten Transistors aufweist, wobei das zweite programmierbare resistive Element programmiert wird, um einen zweiten Widerstand aufzuweisen, der für den zweiten Wert (h₁², v₁², s₁²) repräsentativ ist; **gekennzeichnet durch**
- eine Steuerschaltung (310, 1110), die zum Steuern des ersten und zweiten Transistors eingerichtet ist, um den ersten oder zweiten Zweig auszuwählen; und
- einen ersten Stromspiegel (410, 610, 810), der eingerichtet ist, einen Strom (I₁, I₂), der auf Grundlage des dritten Werts (x₁, x₂) erzeugt wird, an den durch die Steuerschaltung ausgewählten Zweig anzulegen, um über dem ausgewählten Zweig eine erste Spannung (Vtop - Va₁) zu erzeugen, die proportional zum Ergebnis der ersten Multiplikation ist.

2. Die Analoge Vektormultiplikatorschaltung nach Anspruch 1, die ferner eine zweite Schaltung (400', 600', 810_2) zum parallelen Ausführen einer zweiten Multiplikation eines vierten oder fünften Werts mit einem sechsten Wert zusammen mit der ersten Multiplikation aufweist, wobei die zweite Schaltung Folgendes aufweist:
- einen dritten Zweig (402'_1, 602'_1, 812_21), der die Reihenschaltung eines dritten programmierbaren resistiven Elements und eines dritten Transistors aufweist, wobei das dritte programmierbare resistive Element programmiert wird, um einen dritten Widerstand aufzuweisen, der für den vierten Wert (h₂¹, v₂¹, s₂¹) repräsentativ ist;
- einen vierten Zweig (402'_2, 602'_2, 812_22), der die Reihenschaltung eines vierten programmierbaren resistiven Elements und eines vierten Transistors aufweist, wobei das vierte programmierbare resistive Element programmiert wird, um einen vierten Widerstand aufzuweisen, der für den fünften Wert (h₂², v₂², s₂²) repräsentativ ist, wobei die Steuerschaltung (310, 1110) eingerichtet ist, den dritten und vierten Transistor zu steuern, um den dritten oder vierten Zweig auszuwählen; und
- einen zweiten Stromspiegel (410', 610', 810'), der eingerichtet zum Anlegen eines Stroms (I₁, I₂) ist, der auf Grundlage des sechsten Werts (x₂) erzeugt wird, an den durch die Steuerschaltung ausgewählten Zweig der zweiten Schaltung, um über dem ausgewählten Zweig eine zweite Spannung (Va₂) zu erzeugen, die proportional zu dem Ergebnis der zweiten Multiplikation ist.

3. Ein neuronales Netzwerk, das die analoge Vektormultiplikatorschaltung nach Anspruch 1 oder Anspruch 2 aufweist.

4. Das neuronale Netzwerk nach Anspruch 3, das ferner eine erste Crossbar-Array-Schaltung (500, 800) aufweist, die eingerichtet ist, einen oder mehrere zweite Stromwerte (Ib₁, Ib₂, Ib₃) durch Ausführen eines oder mehrerer Multiplikations- und/oder Akkumulationsvorgänge auf Grundlage wenigstens der ersten Spannung (Va₁) auszugeben.

5. Das neuronale Netzwerk nach Anspruch 4, das ferner eine weitere analoge Vektormultiplikatorschaltung (600) aufweist, die eingerichtet ist, einen oder mehrere Ausgangsspannungen (Vc₁, Vc₁) durch Ausführen eines oder mehrerer Multiplikationsvorgänge auf Grundlage des einen oder der mehreren zweiten Stromwerte zu erzeugen.

6. Das neuronale Netzwerk nach Anspruch 5, das ferner Folgendes aufweist:
- eine erste Spannungsreplikationsschaltung, die eingerichtet ist, die durch die erste Schaltung erzeugte erste Spannung (Va₁) zu replizieren und die replizierte Spannung an die Crossbar-Schaltung zu liefern, wobei die erste Spannungsreplikationsschaltung einen Operationsverstärker aufweist.

7. Das neuronale Netzwerk nach einem der Ansprüche 4 bis 6, wobei die dritten und sechsten Werte Komponenten eines Eingangsvektors der Größe n sind, wobei n eine ganze Zahl ist, wobei die Schaltung ferner eingerichtet ist, eine Anzahl K von Folgen von Multiplikations- und Akkumulationsvorgängen auszuführen, wobei K eine ganze Zahl ist, die eine Anzahl von durch das neuronale Netzwerk implementierten Modellen repräsentiert.

8. Das neuronale Netzwerk nach einem der Ansprüche 4 bis 7, wobei:
- die analoge Vektormultiplikatorschaltung eine Anzahl von K × n resistiven Elementen aufweist, die auf die Werte der Koeffizienten von K horizontalen Vektoren der Größe n programmiert sind;
- die Crossbar-Schaltung n × n resistive Elemente aufweist, die auf die inversen Werte der Koeffizienten einer gemeinsamen Matrix (S) der Größe n × n programmiert sind.

9. Das neuronale Netzwerk nach Anspruch 5 oder einem der Ansprüche 6 bis 8, wenn von Anspruch 5 abhängig, wobei:
- die weitere analoge Vektormultiplikatorschaltung eine Anzahl von K × n resistiven Elementen aufweist, die auf die Werte der Koeffizienten von K vertikalen Vektoren der Größe n programmiert sind.

10. Das neuronale Netzwerk nach Anspruch 5 oder einem der Ansprüche 6 bis 8, wenn von Anspruch 5 abhängig, wobei:
- die analoge Vektormultiplikatorschaltung eine Anzahl von n × n resistiven Elementen aufweist, die auf die inversen Werte der Koeffizienten einer gemeinsamen Matrix der Größe n × n programmiert sind;
- die Crossbar-Schaltung eine Anzahl von K × n resistiven Elementen aufweist, die auf die Werte der Koeffizienten von K horizontalen Vektoren der Größe n programmiert sind; und
- die weitere analoge Vektormultiplikatorschaltung eine Anzahl von K × n resistiven Elementen aufweist, die auf die Werte der Koeffizienten von K vertikalen Vektoren der Größe n programmiert sind.

11. Das neuronale Netzwerk nach Anspruch 10, wenn von Anspruch 7 abhängig, das eingerichtet ist, für jedes Modell k unter den K Modellen, die durch das neuronale Netzwerk implementiert werden, n Ausgangsspannungen (Vc₁, Vc₂) zu erzeugen, die n Ausgangswerten yᵢk, 1 ≤ i ≤ n, entsprechen und die folgende Gleichung erfüllen: ${{y}_{i}}^{k} = {{v}_{1}}^{k} \times \left({{h}_{1}}^{k}\times {x}_{1}\times {s}_{i {,}_{1}}+⋯+{{h}_{n}}^{k}\times {x}_{n}\times {s}_{i {,}_{n}}\right)$ wobei vⱼ^{k}, 1 ≤ j ≤ n, der Wert des j-ten Koeffizienten des k-ten vertikalen Vektors ist, hⱼ^{k}, 1 ≤ j ≤ n, der Wert des j-ten Koeffizienten des k-ten horizontalen Vektors ist, s_{i,j} der Wert der i-ten Zeile und j-ten Spalte der gemeinsamen Matrix ist und xⱼ, 1 ≤ j ≤ n, die j-te Komponente des Eingangsvektors ist.

12. Das neuronale Netzwerk nach einem der Ansprüche 3 bis 11, wobei das neuronale Netzwerk eingerichtet ist, Klassifizierungsvorgänge auszuführen.

13. Ein Verfahren zum Ausführen, durch eine erste Schaltung (400, 600, 810_1) einer analogen Vektormultiplikatorschaltung, einer ersten Multiplikation eines ersten oder zweiten Werts mit einem dritten Wert, wobei das Verfahren Folgendes aufweist:
- Programmieren eines ersten programmierbaren resistiven Elements, um einen ersten Widerstand aufzuweisen, der für den ersten Wert (h₁¹, v₁¹, s₁¹) repräsentativ ist, wobei das erste programmierbare resistive Element in Reihe mit einem ersten Transistor in einem ersten Zweig (402_1, 602_1, 812_11) der ersten Schaltung geschaltet ist;
- Programmieren eines zweiten programmierbaren resistiven Elements, um einen zweiten Widerstand aufzuweisen, der für den zweiten Wert (h₁², v₁², s₁²) repräsentativ ist, wobei das zweite programmierbare resistive Element in Reihe mit einem zweiten Transistor in einem zweiten Zweig (402_2, 602_2, 812_12) der ersten Schaltung geschaltet ist;
- Steuern des ersten und zweiten Transistors durch eine Steuerschaltung (310, 1110), um den ersten oder zweiten Zweig auszuwählen; und
- Aufbringen durch einen ersten Stromspiegel (410, 610, 810) eines Stroms (I₁, I₂), der auf Grundlage des dritten Werts (x₁, x₂) erzeugt wird, auf den durch die Steuerschaltung ausgewählten Zweig, um über den ausgewählten Zweig eine erste Spannung (Va₁) zu erzeugen, die proportional zu dem Ergebnis der ersten Multiplikation ist.

14. Das Verfahren nach Anspruch 13, das ferner die Umwandlung der ersten Spannung (Va₁) in einen digitalen Wert durch einen Analog-Digital-Wandler aufweist.

15. Das Verfahren nach Anspruch 13 oder 14, wobei der dritte Wert ein Wert eines Bildes ist.

16. Ein Verfahren zum Trainieren des neuronalen Netzwerks nach einem der Ansprüche 13 bis 15, aufweisend das Bestimmen des ersten Werts und des zweiten Werts unter Verwendung eines Markov-Ketten-Monte-Carlo (MCMC) Lernansatzes.

17. Das Verfahren nach Anspruch 16, wobei die analoge Vektormultiplikatorschaltung OxRAM-Bauelemente aufweist und der Markov-Ketten-Monte-Carlo (MCMC) Lernansatz die Anwendung eines Metropolis-Hastings-Algorithmus aufweist.

18. Das Verfahren nach Anspruch 16, wobei die analoge Multiplikatorschaltung magnetische Domain-Wall-Bauelemente aufweist und der Markov-Ketten-Monte-Carlo (MCMC) Lernansatz die Anwendung eines Stochastic-Gradient-Langevin-Dynamics-Algorithmus aufweist.

## Revendications

1. Circuit analogique multiplicateur de vecteur comprenant un premier circuit (400, 600, 810_1) pour mettre en œuvre une première multiplication d'une première ou d'une deuxième valeur avec une troisième valeur, le premier circuit comprenant :
- une première branche (402_1, 602_1, 812_11) comprenant la connexion en série d'un premier élément résistif programmable et d'un premier transistor, le premier élément résistif programmable étant programmé pour avoir une première résistance représentative de la première valeur ( ${h}_{1}^{1} , {v}_{1}^{1} , {s}_{1}^{1}$) ; et
- une deuxième branche (402_2, 602_2, 812_12) comprenant la connexion en série d'un deuxième élément résistif programmable et d'un deuxième transistor, le deuxième élément résistif programmable étant programmé pour avoir une deuxième résistance représentative de la deuxième valeur ( ${h}_{1}^{2} , {v}_{1}^{2} , {s}_{1}^{2}$) ; **caractérisé en ce que**
- un circuit de commande (310, 1110) configuré pour commander les premier et deuxième transistors pour sélectionner la première ou la deuxième branche ; et
- un premier miroir de courant (410, 610, 810) configuré pour appliquer un courant (I₁, I₂) généré sur la base de la troisième valeur **(*x*₁,*x*₂)** à la branche sélectionnée par le circuit de commande afin de générer, aux bornes de la branche sélectionnée, une première tension (***Vₜₒₚ* - *V*_{*a*1}**) proportionnelle au résultat de la première multiplication.

2. Circuit analogique multiplicateur de vecteur selon la revendication 1, comprenant en outre un deuxième circuit (400', 600', 810_2) pour mettre en œuvre, en parallèle avec la première multiplication, une deuxième multiplication d'une quatrième ou d'une cinquième valeur avec une sixième valeur, le deuxième circuit comprenant :
- une troisième branche (402'_1, 602'_1, 812_21) comprenant la connexion en série d'un troisième élément résistif programmable et d'un troisième transistor, le troisième élément résistif programmable étant programmé pour avoir une troisième résistance représentative de la quatrième valeur ( ${h}_{2}^{1} , {v}_{2}^{1} , {s}_{2}^{1}$) ;
- une quatrième branche (402'_2, 602'_2, 812_22) comprenant la connexion en série d'un quatrième élément résistif programmable et d'un quatrième transistor, le quatrième élément résistif programmable étant programmé pour avoir une quatrième résistance représentative de la cinquième valeur, ( ${h}_{2}^{2} , {v}_{2}^{2} , {s}_{2}^{2}$) dans lequel le circuit de commande (310, 1110) est configuré pour commander les troisième et quatrième transistors pour sélectionner la troisième ou la quatrième branche ;
- un deuxième miroir de courant (410', 610', 810') configuré pour appliquer un courant (I₁, I₂) généré sur la base de la sixième valeur **(*x*₂)** à la branche du deuxième circuit sélectionnée par le circuit de commande afin de générer, aux bornes de la branche sélectionnée, une deuxième tension **(*V*_{*a*2})** proportionnelle au résultat de la deuxième multiplication.

3. Réseau neuronal comprenant le circuit analogique multiplicateur de vecteur selon la revendication 1 ou 2.

4. Réseau neuronal selon la revendication 3, comprenant en outre un premier circuit en réseau à branches transversales (500, 800) configuré pour fournir en sortie une ou plusieurs deuxièmes valeurs de courant **(*Ib*₁,*Ib*₂,*Ib*₃)** en mettant en œuvre une ou plusieurs opérations de multiplication et/ou d'accumulation sur la base d'au moins la première tension **(*V*_{*a*1})**.

5. Réseau neuronal selon la revendication 4, comprenant en outre un circuit analogique multiplicateur de vecteur supplémentaire (600) configuré pour générer une ou plusieurs tensions de sortie **(*V*_{c1},*V*_{c1})** en mettant en œuvre une ou plusieurs opérations de multiplication sur la base des une ou plusieurs deuxièmes valeurs de courant.

6. Réseau neuronal selon la revendication 5, comprenant en outre :
- un premier circuit de réplication de tension configuré pour répliquer la première tension (***V*_{*a*1}**). générée par le premier circuit et fournir la tension répliquée au circuit à branches transversales, le premier circuit de réplication de tension comprenant un amplificateur opérationnel.

7. Réseau neuronal selon l'une quelconque des revendications 4 à 6, dans lequel les troisième et sixième valeurs sont des composantes d'un vecteur d'entrée de taille n, n étant un nombre entier, le circuit étant en outre configuré pour effectuer un nombre K de séquences d'opérations d'accumulation et de multiplication, K étant un nombre entier représentant un nombre de modèles mis en œuvre par le réseau neuronal.

8. Réseau neuronal selon l'une quelconque des revendications 4 à 7, dans lequel :
- le circuit analogique multiplicateur de vecteur comprend un nombre ***K* × *n*** d'éléments résistifs programmés aux valeurs de coefficients de K vecteurs horizontaux de taille n ;
- le circuit à branches transversales comprend n×n éléments résistifs programmés aux valeurs inverses de coefficients d'une matrice partagée (S) de taille n×n.

9. Réseau neuronal selon la revendication 5 ou selon l'une quelconque des revendications 6 à 8 dans leur dépendance à la revendication 5, dans lequel :
- le circuit analogique multiplicateur de vecteur supplémentaire comprend un nombre ***K*** × ***n*** d'éléments résistifs programmés aux valeurs de coefficients de K vecteurs verticaux de taille n.

10. Réseau neuronal selon la revendication 5 ou selon l'une quelconque des revendications 6 à 8 dans leur dépendance à la revendication 5, dans lequel :
- le circuit analogique multiplicateur de vecteur comprend un nombre n×n éléments résistifs programmés aux valeurs inverses de coefficients d'une matrice partagée de taille n×n ;
- le circuit à branches transversales comprend un nombre ***K*** × ***n*** d'éléments résistifs programmés aux valeurs de coefficients de K vecteurs horizontaux de taille n ; et
- le circuit analogique multiplicateur de vecteur supplémentaire comprend un nombre ***K*** × ***n*** d'éléments résistifs programmés aux valeurs inverses de coefficients de K vecteurs verticaux de taille n.

11. Réseau neuronal selon la revendication 10 dans sa dépendance à la revendication 7, configuré pour générer, pour chaque modèle k parmi les K modèles mis en œuvre par le réseau neuronal, n tensions de sortie **(*V*_{*c*1},*V*_{*c*2})***,* correspondant à n valeurs de sorties ${y}_{i}^{k}$, 1 ≤ *i* ≤ *n* vérifiant l'équation suivante : ${y}_{i}^{k} = {v}_{1}^{k} \times \left({h}_{1}^{k}\times {x}_{1}\times {s}_{i , 1}+…+{h}_{n}^{k}\times {x}_{n}\times {s}_{i , n}\right) ,$ où ${v}_{j}^{k}$**,** 1 ≤ *j* ≤ *n,* est la valeur du j-ième coefficient du k-ième vecteur vertical, ${h}_{j}^{k}$, 1 ≤ *j* ≤ *n,* est la valeur du j-ième coefficient du k-ieme vecteur horizontal *s_{i,j}* est la valeur des i-ième ligne et j-ième colonne de la matrice partagée et *xⱼ,* 1 ≤ *j* ≤ *n,* est la j-ième composante du vecteur d'entrée.

12. Réseau neuronal selon l'une quelconque des revendications 3 à 11, dans lequel le réseau neuronal est configuré pour effectuer des opérations de classification.

13. Procédé de mise en œuvre, par un premier circuit (400, 600, 810_1) d'un circuit analogique multiplicateur de vecteur, d'une première multiplication d'une première ou d'une deuxième valeur par une troisième valeur, le procédé comprenant :
- la programmation d'un premier élément résistif programmable pour qu'il ait une première résistance représentative de la première valeur ( ${h}_{1}^{1} , {v}_{1}^{1} , {s}_{1}^{1}$), le premier élément résistif programmable étant connecté en série avec un premier transistor dans une première branche (402_1, 602_1, 812_11) du premier circuit ;
- la programmation d'un deuxième élément résistif programmable pour qu'il ait une deuxième résistance représentative de la deuxième valeur ( ${h}_{1}^{2} , {v}_{1}^{2} , {s}_{1}^{2}$), le deuxième élément résistif programmable étant connecté en série avec un deuxième transistor dans une deuxième branche (402_2, 602_2, 812_12) du premier circuit ;
- la commande, par un circuit de commande (310, 1110), des premier et deuxième transistors pour sélectionner la première ou deuxième branche ; et
- l'application, par un premier miroir de courant (410, 610, 810), d'un courant (I₁, I₂) généré sur la base de la troisième valeur **(*x*₁,*x*₂)** à la branche sélectionnée par le circuit de commande afin de générer, aux bornes de la branche sélectionnée, une première tension (***V*_{*a*1}**). proportionnelle au résultat de la première multiplication proportionnelle au résultat de la première multiplication.

14. Procédé selon la revendication 13, comprenant en outre la conversion, par un convertisseur analogique vers numérique, de la première tension (***V*_{*a*1}**) en une valeur numérique.

15. Procédé selon la revendication 13 ou 14, dans lequel les deuxième et troisième valeurs sont des valeurs d'une image.

16. Procédé d'apprentissage du réseau neuronal selon l'une quelconque des revendications 13 à 15, comprenant la détermination des première et deuxième valeurs en utilisant une approche d'apprentissage de Monte-Carlo par chaînes de Markov (MCMC).

17. Procédé selon la revendication 16, dans lequel le circuit analogique multiplicateur de vecteur comprend des dispositifs OxRAM et l'approche d'apprentissage de Monte-Carlo par chaînes de Markov (MCMC) comprend une application d'un algorithme Metropolis-Hastings.

18. Procédé selon la revendication 16, dans lequel le circuit analogique multiplicateur de vecteur comprend des dispositifs de paroi de domaine magnétique et l'approche d'apprentissage de Monte-Carlo par chaînes de Markov (MCMC) comprend une application de dynamiques de gradient de Langevin stochastique.
